# EUROPÄISCHE PATENTANMELDUNG

(11) **EP 4 567 486 A1**
(43) Veröffentlichungstag der Anmeldung: **11.06.2025**
(21) Anmeldenummer: 24214247.9
(22) Anmeldetag: 20.11.2024
(51) Int. Cl.: G02B 6/42

(54) **STRAHLFÜHRUNGSVORRICHTUNG ZUR FÜHRUNG VON SIGNALLICHTSTRAHLUNG**

(30) Priorität: 30.11.2023 DE 102023133492
(71) Anmelder: FIBERBRIDGE PHOTONICS GMBH, 30419 Hannover (DE)
(72) Erfinder: Theeg, Thomas, 30926 Seelze (DE)
(74) Vertreter: Holz, Christian

(57) **Zusammenfassung**

Die vorliegende Erfindung betrifft eine Strahlführungsvorrichtung (1) zur Führung von Signallichtstrahlung (A) mit wenigstens einem Fasereintrittselement (11), welches ausgebildet ist, die Signallichtstrahlung (A) aufzunehmen, mit wenigstens einem Faseraustrittselement (12), welches ausgebildet ist, die Signallichtstrahlung (A) abzugeben, und mit einer Mehrzahl von Faserelementen (10), welche mit ihrem einen Ende mit dem Fasereintrittselement (11) und mit dem gegenüberliegenden Ende mit dem Faseraustrittselement (12) feststehend verbunden und ausgebildet sind, die Signallichtstrahlung (A) vom Fasereintrittselement (11) zum Faseraustrittselement (12) zu führen.

## Beschreibung

Die vorliegende Erfindung betrifft eine Strahlführungsvorrichtung zur Führung von Signallichtstrahlung.

Auf vielen verschiedenen technischen Gebieten werden heutzutage Glasfasern verwendet. Zu den technischen und insbesondere hochtechnischen Anwendungen gehört die Verwendung von Glasfasern zur Lichtübertragung. So werden Glasfasern zur Datenübertragung mittels Licht verwendet; in diesem Fall können die Glasfasern auch als Lichtwellenleiter bzw. als passive Glasfasern bezeichnet werden. Auch werden Glasfasern in der Medizin zum Beispiel zur Beleuchtung sowie zur Erzeugung von Abbildungen zum Beispiel in Mikroskopen, in Inspektionskameras sowie in Endoskopen verwendet. Ferner werden Glasfasern bei Sensoren eingesetzt, welche dann als faseroptische Sensoren bezeichnet werden können.

Ein weiteres Anwendungsgebiet für Glasfasern stellt die Lasertechnik dar. Hier kann die Laserstrahlung als Signallichtstrahlung mittels einer passiven Glasfaser von einer Laserstrahlungsquelle als Signallichtquelle bzw. als Signallichtstrahlungsquelle zu einer Bearbeitungsstelle geleitet werden, um dort zum Beispiel in der Materialbearbeitung oder in der Medizin zum Beispiel ein Schneiden oder ein Schweißen durchzuführen. Auch kann der Laserstrahl als Laserstrahlung auf diese Art und Weise zum Beispiel in der Messtechnik, in der Mikroskopie oder in der Spektroskopie zum Beispiel einer Probe zugeführt werden. Der Einsatz von passiven Glasfasern zur Leitung eines Laserstrahls kann zum Beispiel bei Anwendungen im Maschinenbau, in der Telekommunikation, in der Medizintechnik sowie in der Sensortechnik erfolgen.

Auch können Glasfasern zur Erzeugung bzw. zur Verstärkung von Laserlicht verwendet und als aktive Glasfasern bezeichnet werden. Faserlaser zur Erzeugung von Laserlicht bzw. Faserverstärker zur Verstärkung von Laserlicht weisen hierzu abschnittsweise einen dotierten Faserkern (siehe unten) auf, welcher das aktive Medium des Faserlasers bzw. des Faserverstärkers, d.h. dessen aktive Glasfaser, bildet. Übliche Dotierungselemente des laseraktiven Faserkerns sind insbesondere Neodym, Ytterbium, Erbium, Thulium und Holmium. Faserlaser bzw. Faserverstärker werden unter anderem in der Industrie für Ultrakurzpulslasersysteme eingesetzt (zum Beispiel bei einer Wellenlänge von ca. 1 µm), in der Messtechnik (zum Beispiel bei LIDAR-Messungen - laser detection and ranging), in medizinischen Anwendungen (zum Beispiel bei einer Wellenlänge von ca. 2 µm) oder in Weltraumanwendungen (zum Beispiel bei einer Wellenlänge von ca. 1,5 µm).

Glasfasern, welche zur Verstärkung des Signallichts wie zum Beispiel der Laserstrahlung bei Faserverstärkern oder zur Erzeugung von Laserstrahlung bei Faserlasern verwendet werden, weisen üblicherweise einen Faserkern (Englisch: fiber core) auf, welcher aus reinem Glas wie zum Beispiel aus reinem Quarzglas besteht und im Fall von passiven Glasfasern häufig mit Germanium dotiert ist; bei aktiven Glasfasern wird üblicherweise eine Dotierung wie zuvor beschrieben verwendet. In bestimmten Fällen kann auch der Fasermantel dotiert sein; dies gilt für passive und für aktive Glasfasern. In Abhängigkeit von der Größe und der numerischen Apertur des Faserkerns kann man zwischen Single-Mode und Multi-Mode Glasfasern unterscheiden. Außerdem kann der Faserkern noch polarisationserhaltende Eigenschaften für das Licht aufweisen und daher als polarisationserhaltende Glasfasern (PM) bezeichnet werden. Auch kann es sich um photonische Kristallglasfasern sowie um Hollow-Core-Glasfasern handeln. Auch wenn sich das Haupanwendungsgebiet auf Glasfasern bezieht, können Polymerfasern oder Fasern aus anderen Materialien, zum Beispiel sogenannte Soft-Glass-Fibers für den mittleren IR Bereich, ebenfalls für derartige Anwendungen eingesetzt werden.

Der Faserkern wird üblicherweise radial von außen von wenigstens einem Fasermantel (Englisch: fiber cladding) umgeben, welcher üblicherweise in der Umfangsrichtung geschlossen ist und somit den Faserkern vollständig umgibt, von den beiden offenen Enden der Glasfaser abgesehen. Auch der Fasermantel besteht üblicherweise aus Quarzglas.

Üblicherweise werden sowohl passive Glasfasern als auch aktive Glasfasern von einer Faserbeschichtung (Englisch: fiber coating) aus zum Beispiel Polymer vergleichbar dem Fasermantel umgeben, welche dann der Glasfaser zugerechnet werden kann. Die Faserbeschichtung kann dem mechanischen Schutz des gläsernen Inneren der Glasfaser dienen sowie deren optische Eigenschaften beeinflussen. Üblicherweise dient bei Glasfasern, in denen das Licht ausschließlich im Faserkern geführt wird (Englisch: Single-Clad Glasfasern), die Faserbeschichtung primär dem mechanischen Schutz. Glasfasern, die Licht im Faserkern und im Fasermantel führen (Englisch: Double-Clad Glasfasern), sind üblicherweise mit einer Faserbeschichtung zur Erfüllung von mechanischen sowie von optischen Eigenschaften ausgeführt.

Zwei in der Praxis häufig vorkommende Querschnittsformen für den Fasermantel sind zylindrisch und oktogonal. Die oktogonale Form für den Fasermantel wird insbesondere bei aktiven Glasfasern eingesetzt.

Derartige Glasfasern können in großen Längen hergestellt werden und sind üblicherweise als Rollenwaren erhältlich. Der Durchmesser des Fasermantels variiert üblicherweise zwischen ca. 80 µm und ca. 1 mm. Besonders bei den größeren Faserdurchmessern wird in der Praxis häufig schon von Faserstäben gesprochen (Englisch: rod-type fiber).

Die Zuführung von Signallicht bzw. von Signallichtstrahlung kann somit über eine Glasfaser erfolgen, welche daher als Strahlführungsvorrichtung bezeichnet und als Kabel bzw. als Strahlzuführungskabel realisiert werden kann. Strahlzuführungskabel zur Führung der Signallichtstrahlung vom Lasersystem zur Anwendung bzw. zum Ort der Anwendung werden heute standardmäßig mit genau einer Glasfaser pro Strahlzuführungskabel realisiert.

Wie bereits erwähnt, bietet die Glasfaser den großen Vorteil, dass das Licht der Signallichtstrahlung über große Strecken in der Glasfaser flexibel z.B. an einem Roboterarm und sicher zum Anwendungsort geführt werden kann. Die einzelne Glasfaser emittiert am Anwendungsort typischerweise aus der einzelnen Glasfaser einen runden Laserstrahl aus einer Single-Mode oder Multi-Mode-Glasfaser.

Der Trend am Markt zeigt jedoch, dass man für viele Anwendungen wie z.B. für das Schweißen, für die additive Fertigung und für Oberflächenbearbeitungen sowie für die Reinigung von Materialien einen modifizierten Laserstrahl, d.h. mit speziellen Strahlprofil, der z.B. nicht perfekt rund ist, einsetzen möchte. Hieraus können für die jeweilige Applikation erhebliche Vorteile entstehen und somit bessere oder neue technische Lösungsansätze realisiert oder geringere Stückkosten erzielt werden.

Hierfür gibt es bereits verschiedene Strahlformungsansätze, den einzelnen runden Laserstrahl aus dem Strahlzuführungskabel für die Applikation entsprechend zu modifizieren bzw. zu formen. Dies führt für einige Applikationen zu großen Vorteilen.

Aus technologischen Gründen können jedoch bisher viele interessante bzw. notwendige Laserstrahlkonfigurationen nicht erreicht werden. Außerdem stößt der Leistungstransport über eine einzelne Glasfaser aus physikalischen und technischen Gründen an seine Grenzen.

Weiterhin ist es für viele Anwendungen wünschenswert, die verfügbare optische Leistung für die entsprechende Applikation am Anwendungsort zu erhöhen, um z.B. besser Schweißen zu können oder additive Fertigungsprozesse schneller umzusetzen (z.B. Selective Laser Melting).

In jedem Fall ist es für viele Anwendungen nützlich oder erforderlich, die Signallichtstrahlung über eine gewissen Strecke bzw. Entfernung, insbesondere vom Ort der Erzeugung bzw. Verstärkung der Signallichtstrahlung, zu führen, zu leiten bzw. zu übertragen, um die Signallichtstrahlung dort zu nutzen bzw. zu verstärken oder zu verändern.

Eine Aufgabe der vorliegenden Erfindung ist es, die Möglichkeiten zur Führung von Signallichtstrahlung, insbesondere auf dem Weg von der Laserquelle zur Nutzung bzw. zur Anwendung, zu verbessern bzw. zu erweitern. Insbesondere sollen die zuvor beschriebenen Herausforderungen zumindest teilweise adressiert bzw. gemeistert werden. Dies soll möglichst einfach, kostengünstig und bzw. oder bauraumsparend erfolgen können. Zumindest soll eine Alternative zu bekannten Möglichkeiten geschaffen werden.

Die Aufgabe wird erfindungsgemäß durch eine Strahlführungsvorrichtung zur Führung von Signallichtstrahlung sowie durch eine Vorrichtung gemäß der unabhängigen Ansprüche gelöst. Vorteilhafte Weiterbildungen sind in den Unteransprüchen beschrieben.

Somit betrifft die vorliegende Erfindung eine Strahlführungsvorrichtung zur Führung von Signallichtstrahlung mit wenigstens einem Fasereintrittselement, welches ausgebildet ist, die Signallichtstrahlung aufzunehmen, mit wenigstens einem Faseraustrittselement, welches ausgebildet ist, die Signallichtstrahlung abzugeben, und mit einer Mehrzahl von Faserelementen, welche mit ihrem einen Ende mit dem Fasereintrittselement und mit dem gegenüberliegenden Ende mit dem Faseraustrittselement feststehend verbunden und ausgebildet sind, die Signallichtstrahlung vom Fasereintrittselement zum Faseraustrittselement zu führen.

Somit können erfindungsgemäß mehrere, d.h. wenigstens zwei, Faserelemente sowohl an ihren Eingängen bzw. an ihren Eingangsseiten mittels des gemeinsamen Fasereintrittselements als auch an ihren Ausgängen bzw. an ihren Ausgangsseiten mittels des gemeinsamen Faseraustrittselements jeweils feststehend miteinander verbunden werden, um Signallichtstrahlung bzw. einzelne Signallichtstrahlungen parallel zueinander, vorzugsweise in derselben Ausbreitungsrichtung, zu führen. Dabei können die Faserelemente dazwischen, d.h. zwischen dem Fasereintrittselement und dem Faseraustrittselement, unverbunden, d.h. lose zueinander, oder miteinander verbunden sein, insbesondere mittels einer gemeinsamen Einhausung oder mittels eines gemeinsamen Mantels, wobei auch zunächst Bündel von Faserelementen gebildet werden können, welche dann gemeinsam von einem Mantel umschlossen werden.

In jedem Fall kann erfindungsgemäß eine Strahlführungsvorrichtung geschaffen werden, um mehrere Signallichtstrahlungen durch die Faserelemente hindurch parallel zueinander vom Fasereintrittselement zum Faseraustrittselement zu führen, so dass die Signallichtstrahlungen auf der Seite des Fasereintrittselements erzeugt und bzw. oder verstärkt und auf der Seite des Faseraustrittselements gemeinsam zur Anwendung gebracht bzw. genutzt werden können. Dies kann die Nutzungsmöglichkeiten erweitern bzw. verbessern. Die Faserelemente können passive und bzw. oder aktive Glasfasern bzw. Glasfaserabschnitten aufweisen und vorzugsweise hieraus bestehen.

Die Aufnahme der Signallichtstrahlung bzw. der Signallichtstrahlungen über das Fasereintrittselement kann über eine Freistrahlkopplung in die Faserelemente oder über eine stoffschlüssige Verbindung (z.B. Faserspleißverbindung) mit den Faserelementen realisiert werden. Somit kann das Fasereintrittselement funktionell als Schnittstelle betrachtet werden, um die Signallichtstrahlung von der Laserquelle oder dergleichen an die Strahlführungsvorrichtung zu übergeben, was kontaktlos oder kontaktbehaftet erfolgen kann. Diese Schnittstelle stellt das Fasereintrittselement dar, egal ob eine Freistrahlkopplung oder eine faserbasierte Verbindung von der Strahlführungsvorrichtung bzw. dessen Fasereintrittselement zur Laserquelle oder dergleichen verwendet wird. Dies gilt entsprechend für das Faseraustrittselement.

Gemäß einem Aspekt der Erfindung sind die Enden der Faserelemente in dem Fasereintrittselement und bzw. oder in dem Faseraustrittselement verschmolzen. Dies kann eine Möglichkeit einer stoffschlüssig festen Verbindung an der jeweiligen Stelle der erfindungsgemäßen Strahlführungsvorrichtung darstellen. Auch können auf diese Art und Weise die Eigenschaften und Vorteile einer derartigen verschmolzenen Verbindung hier angewendet werden.

Gemäß einem weiteren Aspekt der Erfindung weist das Fasereintrittselement den Faserelementen zugewandt pro Faserelement eine Vertiefung oder eine Durchgangsöffnung auf, in welcher das Ende des Faserelements aufgenommen wird, und bzw. oder weist das Faseraustrittselement den Faserelementen zugewandt pro Faserelement eine Vertiefung oder eine Durchgangsöffnung auf, in welcher das Ende des Faserelements aufgenommen wird. In jedem Fall kann das Faserelement auf diese Art und Weise mit seinem entsprechenden Ende in das Material des Fasereintrittselements bzw. in das Material des Faseraustrittselements hineinragen, so dass eine seitliche Stabilisierung bzw. ein seitlicher Halt des Faserelements erfolgen kann. Dies kann mit einem Verschmelzen des Endes des Faserelements innerhalb des Materials des Fasereintrittselements bzw. des Faseraustrittselements zusammen erfolgen, wodurch das Verschmelzen begünstigt bzw. verbessert werden kann. Dabei kann bei einer Durchgangsöffnung das Verschmelzen randseitig erfolgen, um das Ende des Faserelements offen zu halten, so dass die Signallichtstrahlung ein- oder austreten kann. Das Material für das Fasereintrittselement und bzw. oder für das Faseraustrittselement kann entsprechend so gewählt werden, dass optimale optische, thermische und bzw. oder mechanische Eigenschaften erzielt werden. Hier ist z.B. der Werkstoff Quarzglas als vielversprechendes Material zu nennen.

Gemäß einem weiteren Aspekt der Erfindung weisen wenigstens einige, vorzugsweise alle, Faserelemente wenigstens eine Pumplichtfalle auf. Somit können die Eigenschaften und Vorteile von Pumplichtfallen (engl. Cladding Light Stripper oder Cladding Power Stripper) bei der erfindungsgemäßen Strahlführungsvorrichtung angewendet und genutzt werden.

Vorzugsweise sind die Pumplichtfallen jeweils an dem Fasereintrittselement und bzw. oder an dem Faseraustrittselement angeordnet. Somit können die Pumplichtfallen an dem Fasereintrittselement bzw. an dem Faseraustrittselement für die Anwendung störendes Licht, typischerweise aus dem Mantel (engl. Cladding) der Faserelemente entfernen. Am Fasereintrittselement kann störendes Licht z.B. aus der Fasereinkopplung oder einer Faserspleißverbindung resultieren und am Faseraustrittselement z.B. durch anwendungsbedingtes zurückgeworfenes Licht entstehen. Auch kann dies eine kompakte Umsetzung der Strahlführungsvorrichtung begünstigen, da die Pumplichtfallen vom länglichen Verlauf der Faserelemente ferngehalten werden können.

Gemäß einem weiteren Aspekt der Erfindung weist das Fasereintrittselement den Faserelementen abgewandt eine optische Beschichtung, vorzugsweise eine Anti-Reflektionsbeschichtung, auf und bzw. oder weist das Faseraustrittselement den Faserelementen abgewandt eine optische Beschichtung, vorzugsweise eine Anti-Reflektionsbeschichtung, auf. Diese optische Beschichtung kann somit auf der Seite des Fasereintrittselements und bzw. oder des Faseraustrittselements vorgesehen sein, von wo die Signallichtstrahlungen eintreten bzw. nach wo die Signallichtstrahlungen austreten. Die optische Beschichtung kann in jedem Fall die optische Effizienz des Gesamtsystems verbessern und störende Reflexionen, insbesondere bei hohen optischen Leistungen, minimieren.

Gemäß einem weiteren Aspekt der Erfindung weist das Fasereintrittselement den Faserelementen zugewandt um die Faserelemente herum eine optische Beschichtung, vorzugsweise eine Reflektionsbeschichtung und bzw. oder eine Absorptionsbeschichtung, auf und bzw. oder weist das Faseraustrittselement den Faserelementen zugewandt um die Faserelemente herum eine optische Beschichtung, vorzugsweise eine Reflektionsbeschichtung und bzw. oder eine Absorptionsbeschichtung, auf. Entsprechend kann gegenüber dem Fasereintrittselement und bzw. oder gegenüber dem Faseraustrittselement in der Richtung, wo die Faserelemente angeordnet sind, sonst eine Beeinflussung von dort eintretender sonstiger Strahlung erfolgen und gemäß dem vorliegenden Aspekt der Erfindung insbesondere durch die optische Beschichtung als Reflektionsbeschichtung und bzw. oder durch die optische Beschichtung als Absorptionsbeschichtung von dem Fasereintrittselement und bzw. oder von dem Faseraustrittselement sicher abgeführt werden, um somit eine mögliche Schädigung bzw. Zerstörung der Strahlführungsanordnung zu unterbinden.

Gemäß einem weiteren Aspekt der Erfindung weist das Fasereintrittselement den Faserelementen zugewandt um die Faserelemente herum wenigstens ein, vorzugsweise luft- oder wassergekühltes, Absorptions- und bzw. oder Reflektionselement auf und bzw. oder weist das Faseraustrittselement den Faserelementen zugewandt um die Faserelemente herum wenigstens ein, vorzugsweise luft- oder wassergekühltes, Absorptions- und bzw. oder Reflektionselement auf. Dies kann zusätzlich oder alternativ zu der zuvor beschriebenen Reflektionsbeschichtung und bzw. oder Absorptionsbeschichtung als optische Beschichtung unerwünschte Strahlungen von dem Fasereintrittselement und bzw. oder von dem Faseraustrittselement abführen. Das Absorptions- und bzw. oder Reflektionselement kann in das Fasereintrittselement und bzw. oder in das Faseraustrittselement integriert bzw. ein Teil des Fasereintrittselements und bzw. oder Faseraustrittselement sein.

Dabei vorzugsweise eine Luft- oder Wasserkühlung des Absorptions- und bzw. oder Reflektionselement vorzusehen kann die Abfuhr der dort aufgenommenen thermischen Energie begünstigen.

Gemäß einem weiteren Aspekt der Erfindung weist das Fasereintrittselement den Faserelementen abgewandt pro eintretendem Strahl der Signallichtstrahlung eine, vorzugsweise mit einer optischen Beschichtung, vorzugsweise mit einer Anti-Reflektionsbeschichtung, versehene, Eintrittslinse auf und bzw. oder weist das Faseraustrittselement den Faserelementen abgewandt pro austretendem Strahl der Signallichtstrahlung eine, vorzugsweise mit einer optischen Beschichtung, vorzugsweise mit einer Anti-Reflektionsbeschichtung, versehene, Austrittslinse auf. Hierdurch kann mittels der jeweiligen Eintrittslinse eine Bündelung der eintretenden Signallichtstrahlung erfolgen. Mittels der jeweiligen Austrittslinse kann eine Kollimation oder Fokussierung der austretenden Signallichtstrahlung erfolgen. Dabei eine optische Beschichtung wie insbesondere eine Anti-Reflektionsbeschichtung vorzusehen, kann die Nutzung bzw. die Anwendung der entsprechenden zuvor bereits beschriebenen Eigenschaften und Vorteile auch in dieser Stelle ermöglichen.

Gemäß einem weiteren Aspekt der Erfindung weist das Fasereintrittselement pro Faserelement ein Einzeleintrittselement auf, wobei die Einzeleintrittselemente mittels eines Trägers feststehend miteinander verbunden sind, und bzw. oder weist das Faseraustrittselement pro Faserelement ein Einzelaustrittselement auf, wobei die einzelnen Faseraustrittselemente mittels eines Trägers feststehend miteinander verbunden sind. Dies kann eine Alternative zu einem einstückig, d.h. integral, ausgebildeten Fasereintrittselement bzw. Faseraustrittselement, welches mehrere bzw. aller Faserelement aufnimmt, darstellen, wodurch der Gestaltungsspielraum der Umsetzung erhöht werden kann.

Gemäß einem weiteren Aspekt der Erfindung weist der Träger Glas, Metall oder Keramik auf, vorzugsweise besteht hieraus. Hierdurch können die entsprechenden optischen, thermischen und bzw. oder mechanischen Materialeigenschaften an dieser Stelle genutzt werden.

Gemäß einem weiteren Aspekt der Erfindung weist der Träger zumindest abschnittsweise, vorzugsweise im Wesentlichen, eine, vorzugsweise optisch reflektierende und bzw. oder optisch adsorbierende, Oberflächenbeschichtung auf. Hierdurch können die entsprechenden zuvor bereits beschriebenen Eigenschaften und Vorteile auch in dieser Stelle genutzt werden. Die optisch reflektierende und bzw. oder optisch adsorbierende Eigenschaft der Oberflächenbeschichtung kann insbesondere durch eine entsprechende Materialeigenschaft der Oberflächenbeschichtung umgesetzt bzw. erreicht werden. Gemäß einem weiteren Aspekt der Erfindung weist das Fasereintrittselement und bzw. oder das Faseraustrittselement wenigstens ein Abstandselement auf, welches senkrecht zu den Faserelementen verläuft und ausgebildet ist, die Signallichtstrahlung aufzunehmen und zu den Faserelementen hin abzugeben, wobei das Abstandselement zu den Faserelementen hin durch einen, vorzugsweise offenen, gasgefüllten, flüssigkeitsgefüllten, feststoffgefüllten oder vakuumierten, Zwischenraum beabstandet ist, und bzw. oder weist das Faseraustrittselement wenigstens ein Abstandselement auf, welches senkrecht zu den Faserelementen verläuft und ausgebildet ist, die Signallichtstrahlung von den Faserelementen aufzunehmen und von der Strahlführungsvorrichtung weg abzugeben, wobei das Abstandselement zu den Faserelementen hin durch einen, vorzugsweise offenen, gasgefüllten, flüssigkeitsgefüllten, feststoffgefüllten oder vakuumierten, Zwischenraum beabstandet ist. Hierdurch kann jeweils ein Zwischenraum geschaffen werden, durch welchen hindurch die Signallichtstrahlung bzw. die Signallichtstrahlungen führen bzw. verlaufen. Durch die Füllung des Zwischenraums kann somit die Signallichtstrahlung beeinflusst werden.

Gemäß einem weiteren Aspekt der Erfindung weist die den Faserelementen abgewandte Fläche des Abstandselements eine optische Beschichtung, vorzugsweise eine Anti-Reflektionsbeschichtung, auf und bzw. oder weist die den Faserelementen zugewandte Fläche des Abstandselements eine optische Beschichtung, vorzugsweise eine Anti-Reflektionsbeschichtung, auf. Hierdurch können die entsprechenden zuvor bereits beschriebenen Eigenschaften und Vorteile auch in dieser Stelle genutzt werden.

Gemäß einem weiteren Aspekt der Erfindung sind die Faserelemente dem Abstandselement zugewandt durch Durchgangsöffnungen des Fasereintrittselements oder des Faseraustrittselements hindurch, vorzugsweise zurückversetzt, mit dem Zwischenraum verbunden oder werden die Faserelemente dem Abstandselement zugewandt von Vertiefungen des Fasereintrittselements oder des Faseraustrittselements, vorzugsweise zurückversetzt, aufgenommen. Dies kann jeweils eine Möglichkeit darstellen, die Faserelemente mit dem Fasereintrittselement feststehend zu verbinden und die Signallichtstrahlungen aus dem Zwischenraum in die Enden der Faserelemente eintreten zu lassen. Dies kann für einige Glasfasertypen zu einer vorteilhaften Ausführung der Strahlführungsvorrichtung führen, z.B. für Hohlkernfasern. Die Faserelemente selbst können an den Endflächen ggf. auch mit einer Antireflexionsbeschichtung versehen sein, z.B. wenn eine Multi-Mode-Faser als Faserelement genutzt und in einer Durchgangsöffnung eines Fasereintrittselements oder Faseraustrittselements positioniert wird, kann die Endfläche bzw. die Endflächen der Multi-Mode-Faser mit einer Antireflexionsbeschichtung versehen sein.

Gemäß einem weiteren Aspekt der Erfindung weist die Strahlführungsvorrichtung ferner wenigstens ein optisches Element, vorzugsweise wenigstens eine Sammellinse, auf, welches den Faserelementen abgewandt zum Fasereintrittselement mittels eines Halters beabstandet angeordnet und ausgebildet ist, einige, vorzugsweise alle, eintretende Strahlen der Signallichtstrahlung aufzunehmen, und bzw. oder weist die Strahlführungsvorrichtung ferner wenigstens ein optisches Element, vorzugsweise wenigstens eine Sammellinse, auf, welche den Faserelementen abgewandt zum Faseraustrittselement mittels eines Halters beabstandet angeordnet und ausgebildet ist, einige, vorzugsweise alle, austretenden Strahlen der Signallichtstrahlung aufzunehmen.

Somit kann wenigstens ein optisches Element oder auch mehrere optische Elemente vor und bzw. oder nach den Faserelementen als Bestandteil der Strahlführungsvorrichtung vorgesehen werden, um die Signallichtstrahlung vor und bzw. oder nach Durchqueren der optischen Elemente zu beeinflussen. Dies kann die Gestaltungsmöglichkeiten der Signallichtstrahlung erhöhen. Mehrere gleiche und bzw. oder unterschiedliche optische Elemente können dabei entlang der Ausbreitungsrichtung der Signallichtstrahlungen hintereinander angeordnet werden, um ihre Wirkungsweisen zu kombinieren.

Gemäß einem weiteren Aspekt der Erfindung ist das optische Element ein Mikrolinsenarray, wobei das Mikrolinsenarray eine Mikrolinse pro Faserelement, mehrere Mikrolinsen pro Faserelement oder eine gemeinsame Mikrolinse für mehrere Faserelemente aufweist. Unter einem Mikrolinsenarray ist eine zweidimensionale Matrix von vergleichsweise kleinen Linsen im Mikrometerbereich, üblicherweise zwischen ca. 100 µm und ca. 5.000 µm, als Abmessungen zu verstehen, welche gemeinsam ein optisches Element als Array derartiger Mikrolinsen bilden. Somit können auch derartige optische Elemente bei einer erfindungsgemäßen Strahlführungsvorrichtung genutzt werden.

Dabei bietet ein Mikrolinsenarray dahingehend vielfältige Gestaltungs- und Beeinflussungsmöglichkeiten der Signallichtstrahlungen, indem zum einen die Anzahl der Mikrolinsen genau der Anzahl der Faserelemente entspricht und diese entlang der Ausbreitungsrichtung der Signallichtstrahlungen einander genau gegenüberliegend angeordnet werden können. Die Anzahl der Mikrolinsen und die Anzahl der Faserelemente kann jedoch auch unterschiedlich zueinander sein, was zusätzliche Gestaltungsmöglichkeiten bieten kann. Somit können zum einen ausreichend große Mikrolinsen bzw. entsprechend kleine Faserelemente bzw. Ein- und bzw. oder Ausgänge von Faserelementen vorgesehen werden, so dass die Signallichtstrahlungen mehrerer Faserelemente ein und dieselbe Mikrolinse durchqueren. Zum anderen kann auch umgekehrt ein Faserelement bzw. dessen Ein- und bzw. oder Ausgang vergleichsweise groß gegenüber mehrere Mikrolinsen ausgebildet sein, so dass die Signallichtstrahlung des Faserelements die mehreren Mikrolinsen durchquert bzw. die Signallichtstrahlungen mehrere Mikrolinsen gemeinsam in dasselbe Faserelement eintreten. Mittels der genannten Anordnungsmöglichkeiten kann die Signallichtstrahlung bzw. die Signallichtstrahlungen geführt und geformt werden, um z.B. die Signallichtstrahlung zu homogenisieren und bzw. oder die Strahlen für eine kohärente Kombination der Einzelsignallichtstrahlen zu nutzen (engl. Coherent Beam Combining) und bzw. oder um Signallicht-Strahlmuster zu erzeugen.

Gemäß einem weiteren Aspekt der Erfindung weist die Strahlführungsvorrichtung ferner eine Einzellinse pro Faserelement einiger, vorzugsweise alle, Faserelemente auf, welche den Faserelementen abgewandt zum Faseraustrittselement beabstandet angeordnet und ausgebildet ist, jeweils genau einen austretenden Strahl der Signallichtstrahlung aufzunehmen. In beiden Fällen kann hierdurch ein Sammeln bzw. ein Bündeln der austretenden Signallichtstrahlungen erfolgen, um einen gebündelten resultierenden Strahl der Signallichtstrahlungen zu erhalten und verwenden zu können. Entsprechende Einzellinsen pro Faserelement bzw. eine globale Linse für alle Faserelemente können auch am bzw. vor dem Fasereintrittselement eingesetzt werden, um eine möglichste effiziente Kopplung der Signallichtstrahlung bzw. Signallichtstrahlungen in die Faserelemente zu realisieren.

Gemäß einem weiteren Aspekt der Erfindung sind einige, vorzugweise alle, Faserelemente am Fasereintrittselement anders, vorzugsweise größer, als am Faseraustrittselement zueinander beabstandet. Die Beanstandung der Faserelemente kann auch als Packungsdichte bezeichnet werden. Die Beabstandung erfolgt dabei senkrecht zur länglichen Erstreckungsrichtung der Faserelemente.

Somit erfolgt keine rein parallele Übertragung bzw. Führung der Signallichtstrahlungen durch die Faserelemente hindurch, d.h. nicht mit gleichem Abstand zueinander. Vielmehr weisen einige bzw. alle Faserelemente am bzw. im Fasereintrittselement einen anderen Abstand senkrecht zu ihrer länglichen Erstreckung als am bzw. im Faseraustrittselement auf. Hierdurch können die austretenden Signallichtstrahlungen relativ zu den eintretenden Signallichtstrahlungen beeinflusst werden, wodurch auch die Wirkung bzw. die Eigenschaften der austretenden Signallichtstrahlungen bzw. eines aus den austretenden Signallichtstrahlungen resultierenden Strahls der einzelnen Signallichtstrahlungen als Signallichtstrahlung beeinflusst werden kann.

Dabei am bzw. im Fasereintrittselement einen größeren Abstand der Faserelemente zueinander vorzusehen als am bzw. im Faseraustrittselement, wo somit ein kleinerer Abstand vorhanden ist, kann insbesondere eine Erhöhung der Leistungsdichte des resultierenden Strahls der Signallichtstrahlungen ermöglichen. Durch die größere Beabstandung der Faserelemente am Fasereintrittselement kann die Einkopplung der Signallichtstrahlung erleichtert bzw. effizienter und sicherer gestaltet werden. Die Faserelemente können dabei nicht nur im Abstand sondern auch in der Tiefe der Fasereintrittselemente und bzw. oder der Faseraustrittselemente variieren.

Gemäß einem weiteren Aspekt der Erfindung weisen einige, vorzugsweise alle, Faserelemente am Fasereintrittselement eine andere räumliche Anordnung zueinander als am Faseraustrittselement auf. Somit kann auch in diesem Fall keine rein parallele Übertragung bzw. Führung der Signallichtstrahlungen durch die Faserelemente hindurch erfolgen, wobei in diesem Fall zusätzlich oder alternativ zu dem zuvor beschriebenen unterschiedlichen Abstand der Faserelemente zueinander deren Anordnung bzw. Verlauf zueinander verändert wird. Somit kann beispielsweise seitens des Fasereintrittselements eine linienförmige, d.h. eindimensionale, Anordnung der entsprechenden Enden der Faserelemente vorliegen und die Faserelemente können derart zueinander geführt werden, dass eine zweidimensionale Anordnung am Faseraustrittselement, beispielsweise viereckig, rechteckig, fünfeckig, sechseckig usw. oder kreisförmig, oval und dergleichen, vorgesehen werden kann. Auch können unterschiedliche eindimensionale Anordnungen der Faserelemente zueinander am Fasereintrittselement und am Faseraustrittselement, beispielsweise durch unterschiedliche, auch variierende, Abstände zwischen den Faserelementen entlang der einen Dimension, verwendet werden. Ebenso können unterschiedliche zweidimensionale Anordnungen am Fasereintrittselement und am Faseraustrittselement verwendet werden, beispielsweise rechteckig bzw. quadratisch am Fasereintrittselement und kreisförmig am Faseraustrittselement. Dies kann den Gestaltungsspielraum erhöhen, um den resultierenden Strahl der Signallichtstrahlungen zu beeinflussen.

Bei einer Kopplung der Signallichtstrahlung bzw. der Signallichtstrahlungen mittels einer Strahlführungs- und -umlenkeinheit in die Faserelemente am Fasereintrittselement kann die Beabstandung entlang der Längsachse, entlang der Querachse und bzw. oder entlang der vertikalen Achse und bzw. oder die Anordnung der Faserelemente bzw. die Anpassung der Faserquerschnitte optimal auf die Strahlführungs- und -umlenkeinheit angepasst werden, um die Effizienz, Leistungsfähigkeit und Sicherheit des Gesamtsystems deutlich zu verbessern. So können z.B. bei der Nutzung von einem Galvoscanner, von einem akusto-optischen Deflektor oder von anderen Strahlablenksystemen die einzelnen Faserelemente bzgl. Beabstandung, räumlicher Anordnung, Faserquerschnitte und weiterer Eigenschaften am Fasereintrittselement optimal an den Strahlcharakteristik bzw. das Ablenkverhalten des Galvoscanners oder akusto-optischen Deflektors angepasst werden.

Außerdem kann eine Anpassung der Beabstandung entlang der Längsachse, entlang der Querachse und bzw. oder entlang der vertikalen Achse und bzw. oder die Anordnung der Faserelemente und bzw. oder Faserquerschnitte am Fasereintrittselement bei der gleichzeitigen Einkopplung von mehreren Signallichtstrahlen in die Faserelemente vorteilhaft sein, z.B. bei der Nutzung von Mikrolinsenarrays bei der Fasereinkopplung - ggf auch in Kombination mit einem Strahlablenksystem.

Gemäß einem weiteren Aspekt der Erfindung sind einige, vorzugsweise alle, Faserelemente am Fasereintrittselement eindimensional zueinander und am Faseraustrittselement zweidimensional zueinander angeordnet. Dies kann eine konkrete Möglichkeit der Umsetzung darstellen, insbesondere zur Erhöhung der Leistungsdichte des resultierenden Strahls der Signallichtstrahlungen, wie zuvor bereits beschrieben.

Gemäß einem weiteren Aspekt der Erfindung sind einige, vorzugsweise alle, Faserelemente jeweils zylindrisch ausgebildet und am Fasereintrittselement, vorzugsweise hinsichtlich eines Faserkerns, eines Fasermantels und bzw. oder einer Faserbeschichtung, mit einem größeren Querschnitt als am Faseraustrittselement ausgebildet. Hierzu können insbesondere zwei entsprechende Faserelemente mittels eines Verbindungselements bzw. eines Übergangselements zu einem Faserelement verbunden werden, um hierdurch ggf. die Faserelemente am Verbindungselement aneinander optisch anzupassen. Dies kann eine weitere Gestaltungsmöglichkeit darstellen, um die Übertragung der Signallichtstrahlungen bzw. den resultierenden Strahl der Signallichtstrahlungen zu beeinflussen.

Gemäß einem weiteren Aspekt der Erfindung sind einige, vorzugsweise alle, Faserelemente jeweils am Fasereintrittselement mit einer anderen Kontur als am Faseraustrittselement ausgebildet. Beispielsweise können die Faserelemente am bzw. im Fasereintrittselement zylindrisch und am bzw. im Faseraustrittselement eckig, insbesondere viereckig bzw. quadratisch, ausgebildet sein. Auch hierzu können insbesondere zwei entsprechende Faserelement mittels eines Verbindungselements bzw. eines Übergangselements zu einem Faserelement verbunden werden, um somit ggf. die Faserelemente am Verbindungselement aneinander optisch anzupassen. Auch dies kann die Gestaltungsmöglichkeiten erhöhen.

Gemäß einem weiteren Aspekt der Erfindung werden einige, vorzugsweise alle, Faserelemente jeweils zwischen dem Fasereintrittselement und dem Faseraustrittselement mehrfach geteilt. Mit anderen Worten verläuft vom Fasereintrittselement zunächst genau ein Stang pro Faserelement, welcher an dem dem Fasereintrittselement gegenüberliegenden Ende mit einem Faserkoppler oder mit einer Faserweiche verbunden ist, um den einen Verlauf der Signallichtstrahlung in mehrere Verläufe der Signallichtstrahlung zu teilen, welche dann jeweils einem Strang von mehreren Strängen des Faserelements zugeführt werden, welche gemeinsam am bzw. im Faseraustrittselement enden. Hierdurch kann eine Aufteilung der Signallichtstrahlung bzw. eine Vervielfachung der Verläufe der Signallichtstrahlung erfolgen, was ebenfalls die Gestaltungsmöglichkeiten erhöhen kann. Die Faserweichen können passiv oder aktiv steuerbar bzw. regelbar ausgeführt werden.

Gemäß einem weiteren Aspekt der Erfindung sind einige, vorzugsweise alle, Faserelemente zweigeteilt ausgebildet und, vorzugsweise etwa mittig zwischen dem Fasereintrittselement und dem Faseraustrittselement oder näher am Fasereintrittselement oder am Faseraustrittselement, mittels eines Verbindungselements, vorzugsweise stoffschlüssig, miteinander verbunden. Dies kann eine Möglichkeit der Umsetzung wie zuvor beschrieben darstellen, um beispielsweise Stränge der Faserelemente mit unterschiedlichen Durchmessern, Konturen und dergleichen miteinander zu kombinieren. Diese Verbindung der einzelnen Stränge kann direkt miteinander oder auch indirekt über wenigstens ein dazwischen angeordnetes Bauteil erfolgen. Dabei die Trenn- bzw. Fügestelle etwa mittig zu positionieren, kann die Umsetzung vereinfachen. Die Trenn- bzw. Fügestelle zu einem Ende der Faserelemente hin zu versetzen, kann eine kompaktere Bauweise begünstigen.

Gemäß einem weiteren Aspekt der Erfindung sind einige, vorzugsweise alle, Faserelemente einzelne flexible Fasern, vorzugsweise Glasfasern, welche gemeinsam oder in Bündeln von einem flexiblen Material zusammengehalten, besonders vorzugsweise von einem Mantel umschlossen, werden, und die Strahlführungsvorrichtung ist ein Faserkabel, vorzugsweise ein Glasfaserkabel. Dies kann eine konkrete Möglichkeit der Umsetzung darstellen. Insbesondere kann hierdurch eine flexible und damit biegsame Strahlführungsvorrichtung als Faserkabel geschaffen werden, was das Verlegen des Faserkabels zur Anwendung hin vereinfachen kann. Insbesondere kann es dies sehr einfach ermöglichen, das Faserkabel zu einer beweglichen Anwendung wie beispielsweise dem Endeffektor eines Roboterarms und insbesondere eines Knickarmroboters hin zu verlegen. Weiterhin kann das Faserkabel aus sicherheitstechnischen Gründen einen Sensor für Kabel-Bruchschutz bzw. einen Sensorsystem für ungewünschte Kabelstreustrahlung enthalten.

Gemäß einem weiteren Aspekt der Erfindung sind einige, vorzugswiese alle, Faserelemente schief zum Fasereintrittselement und bzw. oder zum Faseraustrittselement ausgerichtet. Unter "schief" ist ein Verlauf bzw. eine längliche Erstreckung von der Senkrechten abweichend zur Seite geneigt zu verstehen. Als "schief" kann auch das Gegenteil von "gerade" verstanden werden. Dies kann die Gestaltungsmöglichkeiten erhöhen.

Gemäß einem weiteren Aspekt der Erfindung ist bzw. sind das Fasereintrittselement und bzw. oder das Faseraustrittselement gekrümmt ausgebildet. Dies kann somit eine konkave oder konvexe Form des Fasereintrittselements und bzw. oder des Faseraustrittselements ermöglichen, was den Gestaltungsspielraum erhöhen kann. Die Krümmung des Fasereintrittselementes und bzw. oder des Faseraustrittselementes kann dabei in beide Raumrichtungen erfolgen. Außerdem kann die Krümmung auch stufenweise durch aneinandergereihte gerade Segmente erfolgen.

Dabei vorzugsweise die Faserelemente parallel zur Flächennormalen des Fasereintrittselements und bzw. oder des Faseraustrittselements auszurichten, kann es ermöglichen, trotz der gekrümmten Ausbildung einen geradlinigen Übergang vom Fasereintrittselement in die Faserelemente und bzw. oder von den Faserelementen in das Faseraustrittselement zu ermöglichen. Dies kann zu einer verbesserten und sicheren Zuführung der Signallichtstrahlung bzw. der Signallichtstrahlungen in die Faserelemente und zu einer für die Anwendung verbesserten Nutzung der Signallichtstrahlung bzw. der Signallichtstrahlungen am Faseraustrittselement führen.

Gemäß einem weiteren Aspekt der Erfindung weisen einige, vorzugsweise alle, Faserelemente jeweils wenigstens einen Faserkerne auf, welcher jeweils von wenigstens einem Fasermantel im Wesentlichen umschlossen wird, wobei einige, vorzugsweise alle, Faserkerne und bzw. oder einige, vorzugsweise alle, Fasermantel Glas, vorzugsweise Quarzglas oder als Glas-Luft Materialstrukturen, aufweisen, vorzugsweise hieraus bestehen. Dies kann eine konkrete Möglichkeit der Umsetzung darstellen. Die Faserelemente können dabei passiv oder aktiv dotiert sein (laseraktive Dotierung). Die Faserelemente können außerdem aus vollen Glasmaterial, photonischen Kristallfasern, Hohlkernfasern, Multikernfasern oder Multi-Clad-Fasern bestehen.

Gemäß einem weiteren Aspekt der Erfindung werden einige, vorzugsweise alle, Fasermantel jeweils von einer Faserbeschichtung im Wesentlichen umschlossen, wobei die Faserbeschichtungen ein weicheres Material als Glas, vorzugsweise ein Acrylat, ein Silicon oder ein Polyimid, aufweisen, vorzugsweise hieraus bestehen. Dies kann eine konkrete Möglichkeit der Umsetzung darstellen.

Die Erfindung betrifft auch eine Vorrichtung mit wenigstens einer Strahlführungsvorrichtung wie zuvor beschrieben. Somit kann eine Umsetzung der Eigenschaften und Vorteile der zuvor beschriebenen erfindungsgemäßen Strahlführungsvorrichtung bei einer übergeordneten Vorrichtung, Anlage bzw. Anwendung erfolgen, um diese praktisch nutzen zu können.

Mit anderen Worten können zur teilweisen oder vollständigen Überwindung der genannten Herausforderungen Ausführungen einer erweiterten Strahlführungsvorrichtung aus mehreren Glasfasern genutzt werden. Für viele Anwendungen, zum Beispiel in der Materialbearbeitung oder in der Medizintechnik, ist es relevant, einzelne oder mehrere Laserstrahlen aus den genannten Gründen in einer möglichst räumlich kompakten und vor allem thermisch und mechanisch hochstabilen Anordnung über mehreren Glasfasern am Einsatzort zu nutzen. Hierdurch kann z.B. eine inkohärente oder kohärente Kombination von zahlreichen Laserstrahlen realisiert werden oder eben eine besonderer Strahlformung und bzw. oder Strahlablenkung (statisch oder zeitlich moduliert). Dabei können mehrere Laserstrahlen, je nach Ziel, in einer ein- oder zweidimensionalen geometrischen Anordnung mittels Glasfasern zueinander angeordnet werden und am Anwendungsort dementsprechend genutzt werden. Weiterhin kann ein Laserstrahl in eine 1D- oder 2D-Anordnung von Glasfasern zeitlich aufeinanderfolgend gezielt in verschiedene Glasfasern eingekoppelt und das daraus resultierende Strahlprofil am Ausgang des Strahlzuführungskabel, also am Anwendungsort, genutzt werden.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine perspektivische Darstellung einer Anwendung einer erfindungsgemäßen Strahlführungsvorrichtung in Form eines Faserkabels;
- Figur 2: einen horizontalen Schnitt durch eine erfindungsgemäße Strahlführungsvorrichtung gemäß einem ersten Ausführungsbeispiel;
- Figur 3: einen horizontalen Schnitt durch eine erfindungsgemäße Strahlführungsvorrichtung gemäß einem zweiten Ausführungsbeispiel;
- Figur 4: einen horizontalen Schnitt durch eine erfindungsgemäße Strahlführungsvorrichtung gemäß einem dritten Ausführungsbeispiel;
- Figur 5: einen horizontalen Schnitt durch eine erfindungsgemäße Strahlführungsvorrichtung gemäß einem vierten Ausführungsbeispiel;
- Figur 6: einen horizontalen Schnitt durch eine erfindungsgemäße Strahlführungsvorrichtung gemäß einem fünften Ausführungsbeispiel;
- Figur 7: einen horizontalen Schnitt durch eine erfindungsgemäße Strahlführungsvorrichtung gemäß einem sechsten Ausführungsbeispiel;
- Figur 8: einen horizontalen Schnitt durch eine erfindungsgemäße Strahlführungsvorrichtung gemäß einem siebten Ausführungsbeispiel;
- Figur 9: einen horizontalen Schnitt durch eine erfindungsgemäße Strahlführungsvorrichtung gemäß einem achten Ausführungsbeispiel;
- Figur 10: einen horizontalen Schnitt durch eine erfindungsgemäße Strahlführungsvorrichtung gemäß einem neunten Ausführungsbeispiel;
- Figur 11: einen horizontalen Schnitt durch eine erfindungsgemäße Strahlführungsvorrichtung gemäß einem zehnten Ausführungsbeispiel;
- Figur 12: einen horizontalen Schnitt durch eine erfindungsgemäße Strahlführungsvorrichtung gemäß einem elften Ausführungsbeispiel;
- Figur 13: einen horizontalen Schnitt durch eine erfindungsgemäße Strahlführungsvorrichtung gemäß einem zwölften Ausführungsbeispiel;
- Figur 14: einen horizontalen Schnitt durch eine erfindungsgemäße Strahlführungsvorrichtung gemäß einem dreizehnten Ausführungsbeispiel;
- Figur 15: einen horizontalen Schnitt durch eine erfindungsgemäße Strahlführungsvorrichtung gemäß einem vierzehnten Ausführungsbeispiel;
- Figur 16: einen horizontalen Schnitt durch eine erfindungsgemäße Strahlführungsvorrichtung gemäß einem fünfzehnten Ausführungsbeispiel;
- Figur 17: einen horizontalen Schnitt durch eine erfindungsgemäße Strahlführungsvorrichtung gemäß einem sechszehnten Ausführungsbeispiel;
- Figur 18: einen horizontalen Schnitt durch eine erfindungsgemäße Strahlführungsvorrichtung gemäß einem siebzehnten Ausführungsbeispiel;
- Figur 19: einen horizontalen Schnitt durch eine erfindungsgemäße Strahlführungsvorrichtung gemäß einem achtzehnten Ausführungsbeispiel;
- Figur 20: einen horizontalen Schnitt durch eine erfindungsgemäße Strahlführungsvorrichtung gemäß einem neunzehnten Ausführungsbeispiel;
- Figur 21: einen horizontalen Schnitt durch eine erfindungsgemäße Strahlführungsvorrichtung gemäß einem zwanzigsten Ausführungsbeispiel;
- Figur 22: einen horizontalen Schnitt durch eine erfindungsgemäße Strahlführungsvorrichtung gemäß einem einundzwanzigsten Ausführungsbeispiel mit einer Signalstrahlungsquelle;
- Figur 23: einen horizontalen Schnitt durch eine erfindungsgemäße Strahlführungsvorrichtung gemäß einem zweiundzwanzigsten Ausführungsbeispiel mit einer Signalstrahlungsquelle;
- Figur 24: einen horizontalen Schnitt durch eine erfindungsgemäße Strahlführungsvorrichtung gemäß einem dreiundzwanzigsten Ausführungsbeispiel mit einer Signalstrahlungsquelle;
- Figur 25: einen horizontalen Schnitt durch eine erfindungsgemäße Strahlführungsvorrichtung gemäß einem vierundzwanzigsten Ausführungsbeispiel mit einer Signalstrahlungsquelle;
- Figur 26: einen horizontalen Schnitt durch eine erfindungsgemäße Strahlführungsvorrichtung gemäß einem fünfundzwanzigsten Ausführungsbeispiel mit einer Signalstrahlungsquelle; und
- Figur 27: einen horizontalen Schnitt durch eine erfindungsgemäße Strahlführungsvorrichtung gemäß einem sechsundzwanzigsten Ausführungsbeispiel mit einer Signalstrahlungsquelle.

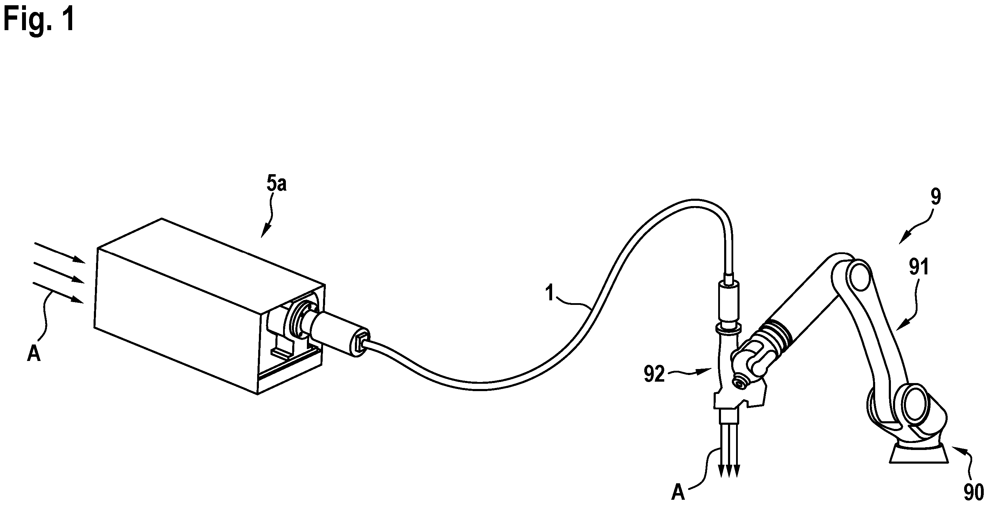

Figur 1 zeigt eine perspektivische Darstellung einer Anwendung einer erfindungsgemäßen Strahlführungsvorrichtung 1 in Form eines Faserkabels 1.

Die Anwendung ist eine Handhabungseinheit 9 in Form eines Knickarmroboters 9 mit einer Basis 90, mehreren Gliedern 91 bzw. Armen 91 und einer Endeffektoreinheit 92 als Bearbeitungseinheit 92, welche mittels der angetriebenen Arme 91 gegenüber der Basis 90 bewegt, positioniert und ausgerichtet werden kann.

Die erfindungsgemäße Strahlführungsvorrichtung 1 in Form eines Faserkabels 1 bzw. eines Glasfaserkabels 1, wie bereits erwähnt, ist auf der einen Seite mit einem Signallichtverstärker 5a verbunden, welche mehrere parallele Signallichtstrahlungen A in Form von Laserlichtstrahlungen A erhält und in das Faserkabel 1 einspeist. Über das Faserkabel 1 werden die Signallichtstrahlungen A parallel zueinander zu dessen Ende geführt, wo die Signallichtstrahlungen A in die Bearbeitungseinheit 92 übergehen, um mittels der Bearbeitungseinheit 92 auf einen Ort einer Laserlichtbearbeitet gerichtet zu werden.

Erfindungsgemäß können die Signallichtstrahlungen A dabei parallel zueinander in das erfindungsgemäße Faserkabel 1 eingespeist und dort weitergeleitet bzw. geführt werden sowie aus dem gegenüberliegenden Ende des Faserkabels 1 austreten. Dabei kann eine Beeinflussung der Signallichtstrahlungen A beim Eintreten, beim Führen und bzw. oder beim Austreten sowie unmittelbar danach erfolgen, wie anhand der verschiedenen Ausführungsbeispiele nachfolgend näher beschrieben werden wird.

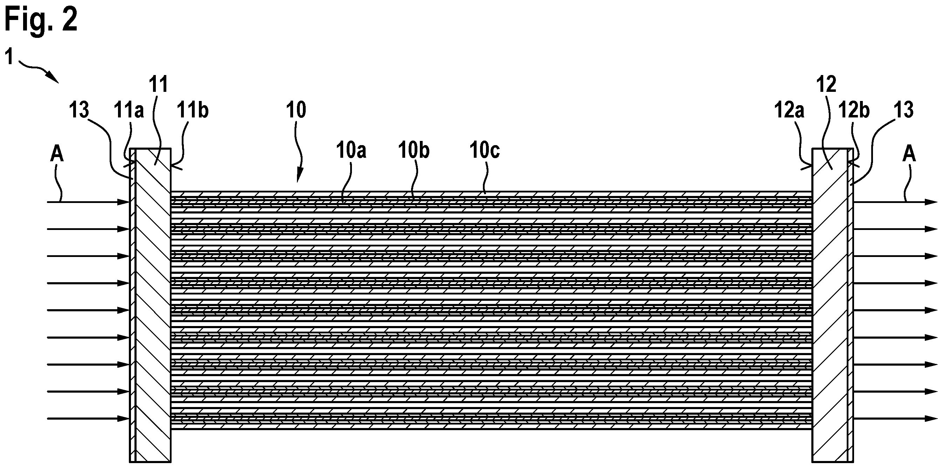

Figur 2 zeigt einen horizontalen Schnitt durch eine erfindungsgemäße Strahlführungsvorrichtung 1 gemäß einem ersten Ausführungsbeispiel.

Die Strahlführungsvorrichtung 1 bzw. das Faserkabel 1 besteht im Wesentlichen entlang seiner länglichen Erstreckungsrichtung aus einer Mehrzahl von Faserelementen 10 in Form flexibler Fasern 10 bzw. Glasfasern 10 mit jeweils einem Faserkern 10a, einem den Faserkern 10a umgebenden Fasermantel 10b sowie eine den Fasermantel 10b umgebenden Faserbeschichtung 10c. Die Faserkerne 10a und die Fasermäntel 10b bestehen aus Quarzglas. Die Faserbeschichtungen 10c bestehen aus einem weicheren Material als Glas, beispielsweise aus Acrylat, Silicon oder Polyimid.

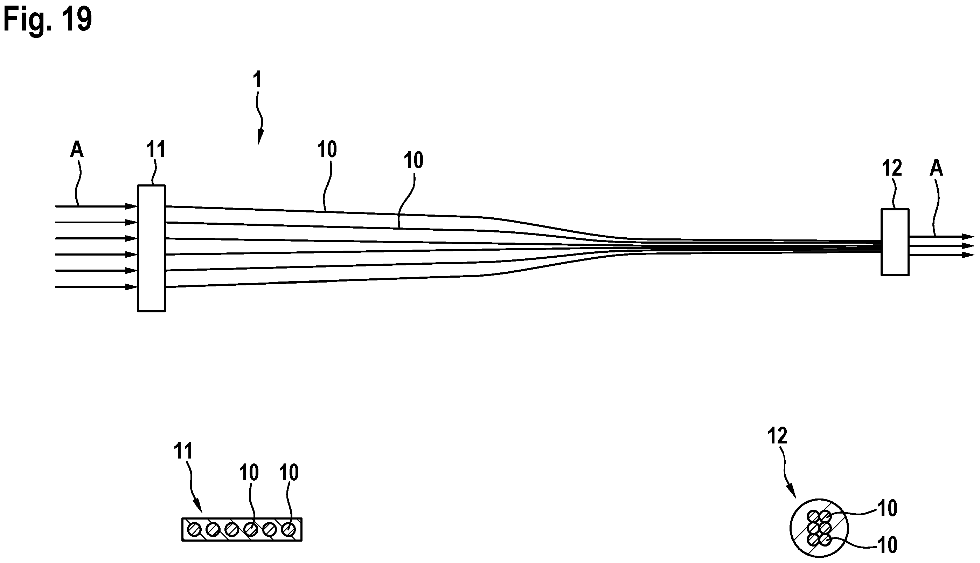

An dem einen Ende, welches bei der Anwendung der eingehenden Signallichtstrahlung A zugewandt ist, weist die Strahlführungsvorrichtung 1 bzw. das Faserkabel 1 ein Fasereingangselement 11 als länglicher Quader, vgl. beispielsweise Figur 19, mit einer der eingehenden Signallichtstrahlung A zugewandten Eintrittsseite 11a und einer gegenüberliegenden Austrittsseite 11b auf. Die entsprechenden Enden der Faserelemente 10 sind mit der Oberfläche der Austrittsseite 11b stoffschlüssig verschweißt.

Ebenso weist die Strahlführungsvorrichtung 1 bzw. das Faserkabel 1 entlang der Faserelemente 10 ein Faseraustrittselement 12 auf, mit dessen Eintrittsseite 12a die gegenüberliegenden Enden der Faserelemente 10 ebenso verschweißt sind. Das Faseraustrittselement 12 ist ebenfalls quaderförmig ausgebildet und weist der Eintrittsseite 12a gegenüberliegend eine Austrittsseite 12b auf, über welche die Signallichtstrahlungen A nach außerhalb der Strahlführungsvorrichtung 1 austreten können.

Erfindungsgemäß können auf diese Art und Weise die Faserelemente 10 definiert, hier in einer Reihe, zueinander angeordnet und beabstandet werden, so dass die Signallichtstrahlungen A entsprechend parallel zueinander durch das Fasereingangselement 11 bzw. dessen Eintrittsseite 11a in die Strahlführungsvorrichtung 1 eintreten und dort direkt jeweils in eines der Faserelemente 10 übergehen können. Die Faserelemente 10 leiten die Signallichtstrahlungen A parallel zueinander durch sich hindurch, bis die Signallichtstrahlungen A gemeinsam in das Faseraustrittselement 12 eintreten und von dort parallel zueinander über dessen Austrittsseite 12b als Signallichtstrahlung A in die Umgebung der Strahlführungsvorrichtung 1 austreten. Dies kann eine besonders einfache Möglichkeit darstellen, die Signallichtstrahlungen A beispielsweise von dem Signallichtverstärker 5a zur Anwendung der Figur 1 zu führen.

Zur Vermeidung von Reflektionen weisen dabei sowohl die Eintrittsseite 11a des Fasereingangselements 11 als auch die Austrittsseite 12b des Faseraustrittselements 12 eine optische Beschichtung 13 in Form einer Anti-Reflektionsbeschichtung 13 auf.

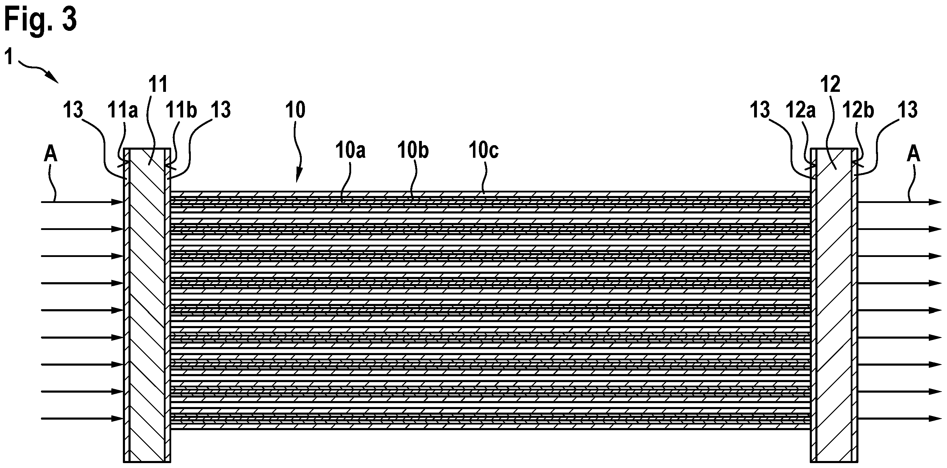

Figur 3 zeigt einen horizontalen Schnitt durch eine erfindungsgemäße Strahlführungsvorrichtung 1 gemäß einem zweiten Ausführungsbeispiel.

In diesem Fall weist, verglichen mit dem ersten Ausführungsbeispiel der Figur 2, sowohl die Austrittsseite 11b des Fasereingangselements 11 als auch die Eintrittsseite 12a des Faseraustrittselements 12 jeweils um die Faserelemente 10 herum eine optische Beschichtung 13 in Form einer Reflektionsbeschichtung 13 oder Absorptionsbeschichtung 13 auf, um das ungewollte Eintreten von Licht von diesen beiden Seiten in das Fasereingangselement 11 bzw. in das Faseraustrittselement 12 zu vermeiden, da die Signallichtstrahlungen A hierdurch gestört bzw. beeinflusst werden könnten.

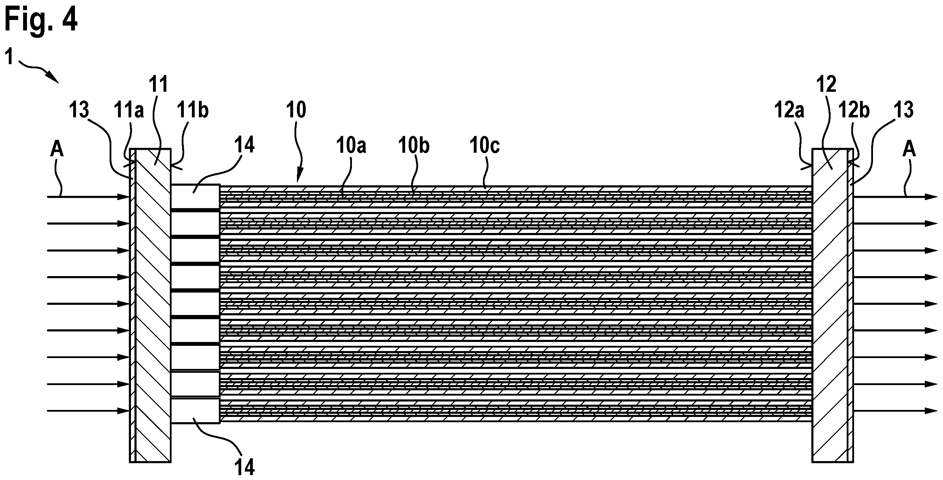

Figur 4 zeigt einen horizontalen Schnitt durch eine erfindungsgemäße Strahlführungsvorrichtung 1 gemäß einem dritten Ausführungsbeispiel.

In diesem Fall sind, verglichen mit dem ersten Ausführungsbeispiel der Figur 2, zwischen der Austrittsseite 11b des Fasereingangselements 11 und den entsprechenden Enden (nicht bezeichnet) der Faserelemente 10 jeweils eine Pumplichtfalle 14 angeordnet, um an dieser Stelle ungewolltes Pumplicht aus den Fasermänteln 10b abzuführen und somit von den Faserelementen 10 bzw. dem sich dort ausbreitenden Signallichtstrahlungen A fernzuhalten.

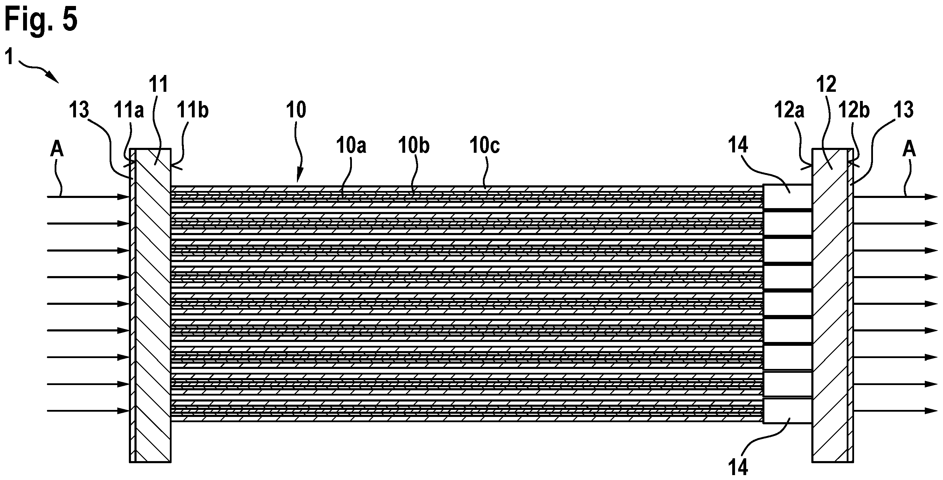

Figur 5 zeigt einen horizontalen Schnitt durch eine erfindungsgemäße Strahlführungsvorrichtung 1 gemäß einem vierten Ausführungsbeispiel.

Verglichen mit dem dritten Ausführungsbeispiels der Figur 4 sind in diesem Fall die Pumplichtfallen 14 an den Enden der Faserelemente 10 angeordnet, so dass ungewolltes Pumplicht der Fasermänteln 10b direkt vom Faseraustrittselement 12 ferngehalten werden kann.

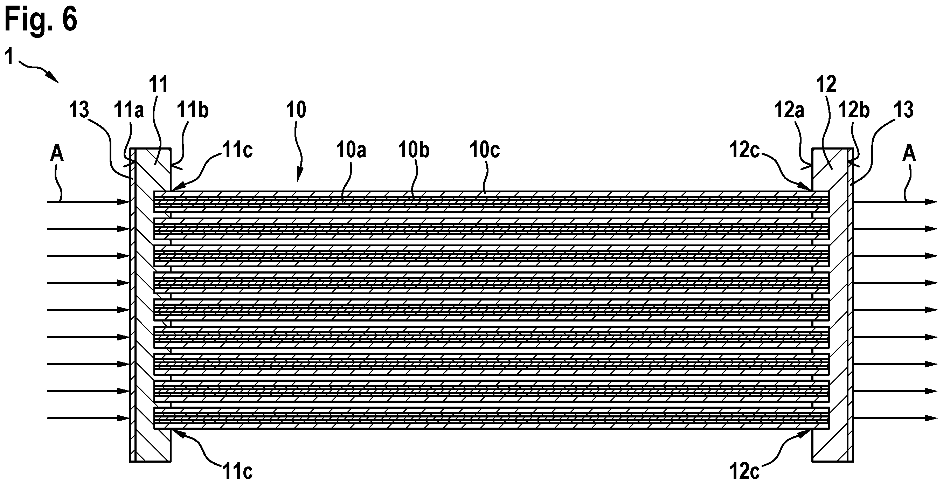

Figur 6 zeigt einen horizontalen Schnitt durch eine erfindungsgemäße Strahlführungsvorrichtung 1 gemäß einem fünften Ausführungsbeispiel.

In diesem Fall weisen, verglichen mit dem ersten Ausführungsbeispiel der Figur 2, jeweils pro Faserelement 10 sowohl das Fasereintrittselement 11 eine Vertiefung 11c der Austrittsseite 11b als auch das Faseraustrittselement 12 eine Vertiefung 12c der Eintrittsseite 12a, in welchen die Enden der Faserelemente 10 jeweils eingelassen und dort mit dem Fasereintrittselement 11 bzw. mit dem Faseraustrittselement 12 verschmolzen sind. Dies kann die stoffschlüssige Verbindung jeweils verbessern.

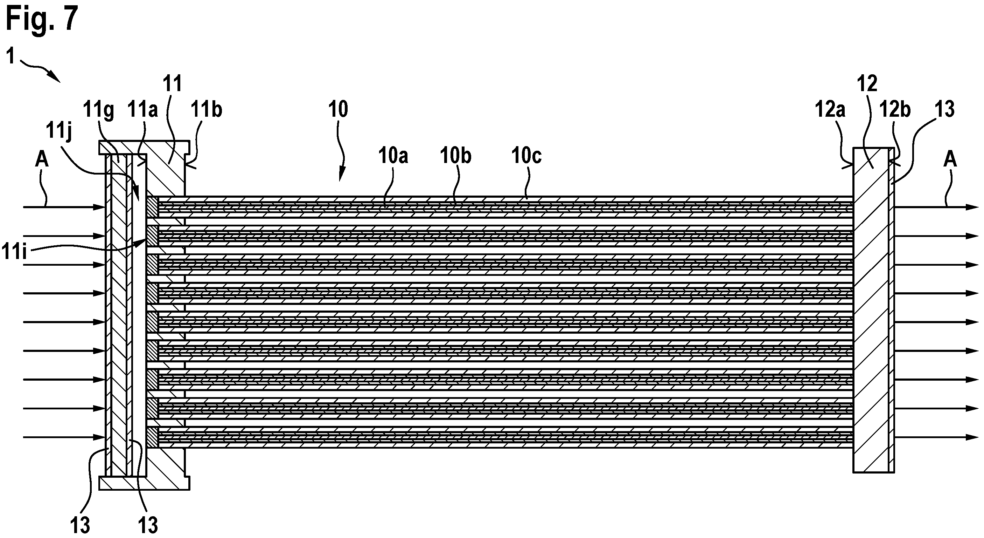

Figur 7 zeigt einen horizontalen Schnitt durch eine erfindungsgemäße Strahlführungsvorrichtung 1 gemäß einem sechsten Ausführungsbeispiel.

In diesem Fall entspricht das Faseraustrittselement 12 beispielsweise dem Faseraustrittselement 12 des ersten Ausführungsbeispiels der Figur 2. Das Fasereintrittselement 11 hingegen ist deutlich anders ausgebildet als bei den vorangehenden Ausführungsbeispielen. So weist das Fasereintrittselement 11 zum einen Durchgangsöffnungen 11i auf, welche entlang der Ausbreitungsrichtung der Signallichtstrahlungen A durch das Fasereintrittselement 11 hindurchgehen und die entsprechenden Enden der Faserelemente 10 in sich aufnehmen, um ein vorbestimmtes Maß jedoch in die Durchgangsöffnungen 11i hinein versetzt, wo die Enden der Faserelemente 10 mit dem Material des Fasereintrittselements 11 verschweißt sind.

Zum anderen erstreckt sich der Rand (nicht bezeichnet) des Fasereintrittselements 11 kragenförmig von den Faserelementen 10 weg. Im Bereich des Rands bzw. des Kragens ist ein Abstandselement 11g stoffschlüssig verbunden angeordnet, so dass ein Zwischenraum 11j bzw. ein Abstand 11j entsteht, welche gasgefüllt, flüssigkeitsgefüllt, feststoffgefüllt oder vakuumiert sein kann. Das Abstandselement 11g weist beidseitig optische Beschichtungen 13 in Form von Anti-Reflektionsbeschichtungen 13 auf.

Somit können die Signallichtstrahlungen A durch das Abstandselement 11g hindurch in den Zwischenraum 11j gelangen, was von den beiden Anti-Reflektionsbeschichtungen 13 des Abstandselements 11g begünstigt wird. Im Zwischenraum 11j können die Signallichtstrahlungen A durch das dort befindliche Medium bzw. durch den Übergang an den Grenzschichten beeinflusst werden. Dann können die Signallichtstrahlungen A direkt in die Enden der Faserelemente 10 eintreten und sich dort wie zuvor beschrieben weiter ausbreiten.

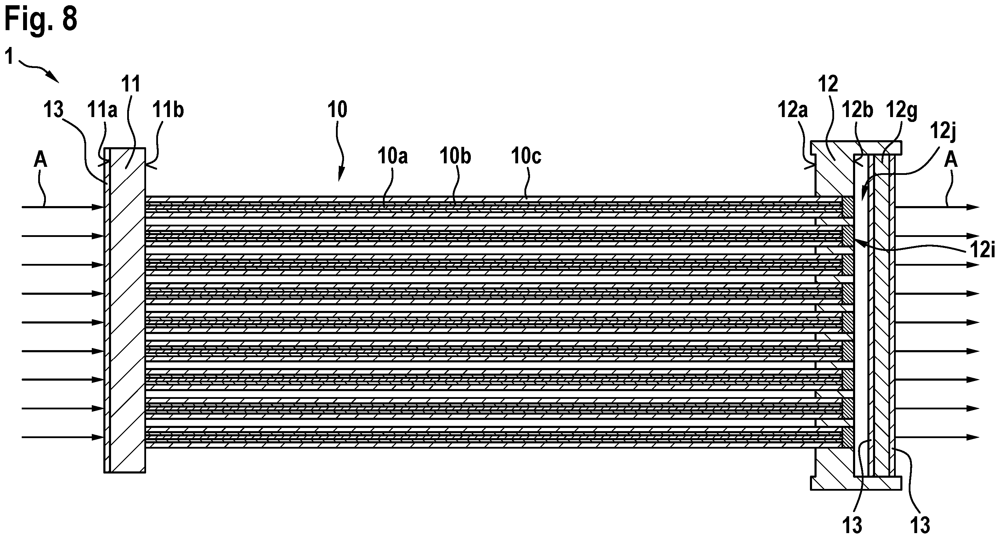

Figur 8 zeigt einen horizontalen Schnitt durch eine erfindungsgemäße Strahlführungsvorrichtung 1 gemäß einem siebten Ausführungsbeispiel.

In diesem Fall sind seitens des Faseraustrittselements 12 ein Abstandselement 12g, ein Zwischenraum 12j bzw. ein Abstand 12j sowie Durchgangsöffnungen 12i des Faseraustrittselements 12 vorgesehen, wie zuvor hinsichtlich des sechsten Ausführungsbeispiels der Figur 7 für das Fasereintrittselement 11 beschrieben. Somit können die dort erzielten Eigenschaften und Vorteile alternativ oder zusätzlich auch auf das Faseraustrittselement 12 angewendet und dort umgesetzt werden.

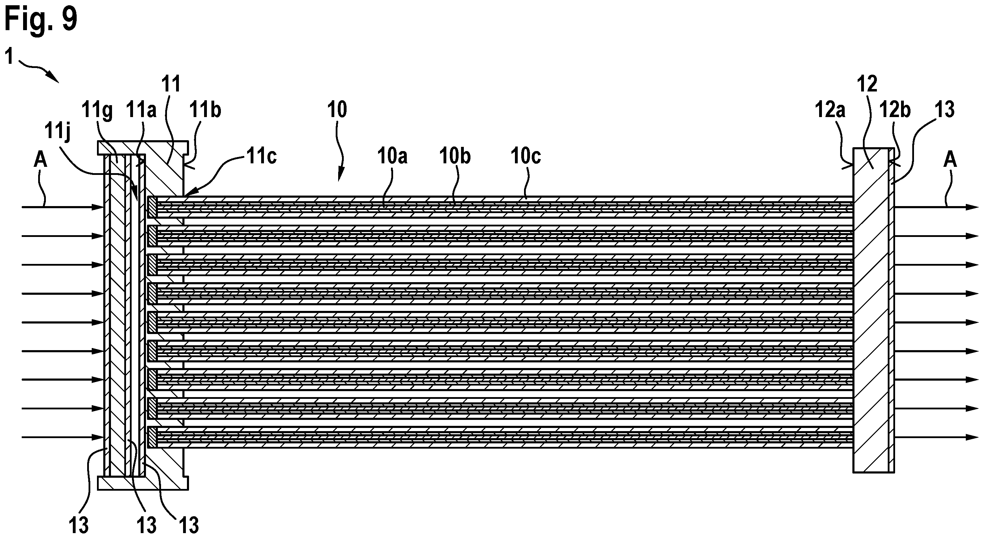

Figur 9 zeigt einen horizontalen Schnitt durch eine erfindungsgemäße Strahlführungsvorrichtung 1 gemäß einem achten Ausführungsbeispiel.

Dieses Ausführungsbeispiel entspricht dem vorangehenden sechsten Ausführungsbeispiel der Figur 7 mit dem Unterschied, dass das Fasereintrittselement 11 nun Vertiefungen 11c anstelle der Durchgangsöffnungen 11i aufweist, welche die Enden der Faserelemente 10 nicht vollständig bis zum Boden der Vertiefungen 11c, sondern etwas beabstandet aufnehmen. Die hierdurch wieder durchgängige Fläche der Eintrittsseite 11a des Fasereintrittselements 11 weist eine optische Beschichtung 13 auf, welche ebenfalls eine Anti-Reflektionsbeschichtung 13, um das Durchtreten der Signallichtstrahlungen A zu begünstigen.

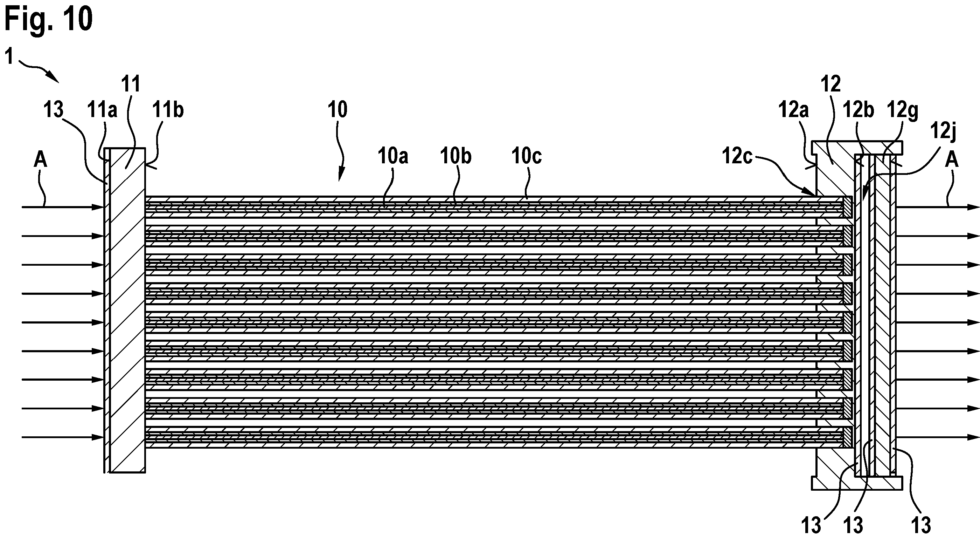

Figur 10 zeigt einen horizontalen Schnitt durch eine erfindungsgemäße Strahlführungsvorrichtung 1 gemäß einem neunten Ausführungsbeispiel. In diesem Fall werden die zuvor hinsichtlich des Fasereintrittselements 11 der Figur 9 beschriebenen Eigenschaften und Vorteile des Fasereintrittselements 11 auf das Faseraustrittselement 12 gemäß der Figur 8 angewendet, was alternativ oder auch gemeinsam erfolgen kann.

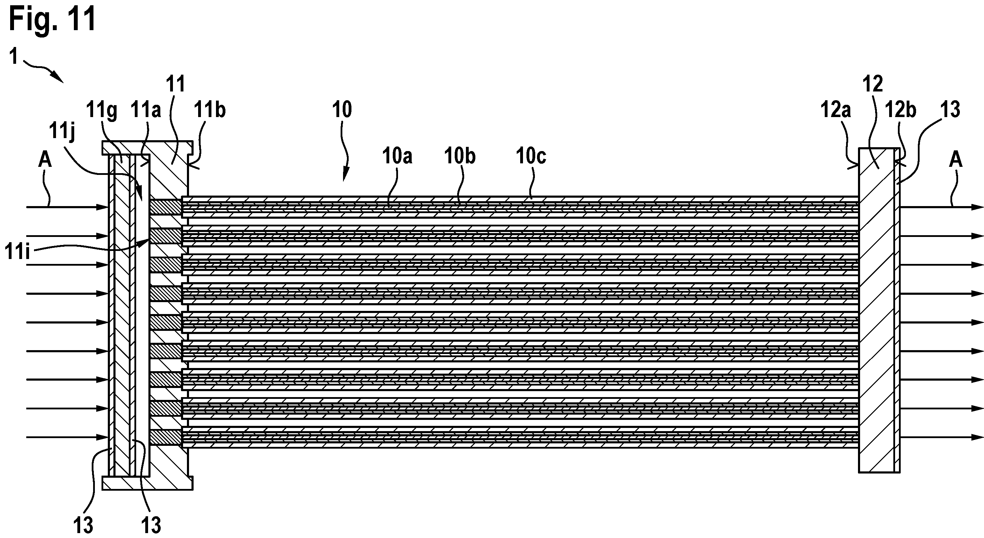

Figur 11 zeigt einen horizontalen Schnitt durch eine erfindungsgemäße Strahlführungsvorrichtung 1 gemäß einem zehnten Ausführungsbeispiel.

Dieses Ausführungsbeispiel entspricht ebenfalls dem sechsten Ausführungsbeispiel der Figur 7 mit dem Unterschied, dass sich die Durchgangsöffnungen 11i deutlich länger erstrecken, ohne die Faserelemente 10 aufzunehmen, was erst randseitig nahe der Austrittsseite 11b des Fasereintrittselements 11 erfolgt. Auch weisen die Durchgangsöffnungen 11i einen geringeren Querschnitt als die Faserelemente 10 auf.

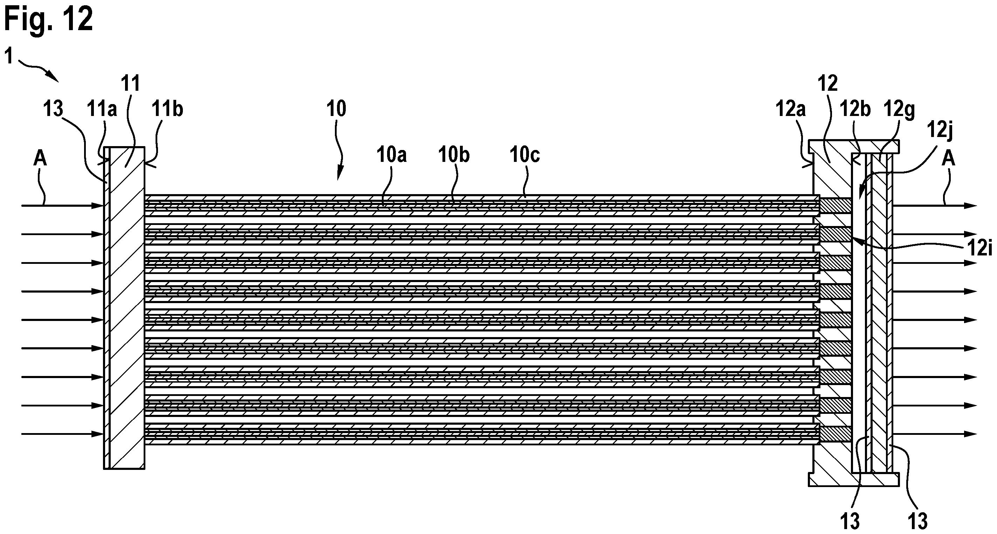

Figur 12 zeigt einen horizontalen Schnitt durch eine erfindungsgemäße Strahlführungsvorrichtung 1 gemäß einem elften Ausführungsbeispiel. In diesem Fall werden die zuvor hinsichtlich des Fasereintrittselements 11 der Figur 11 beschriebenen Eigenschaften und Vorteile auf das Faseraustrittselement 12 gemäß der Figuren 8 bzw. 10 angewendet, was alternativ oder auch gemeinsam erfolgen kann.

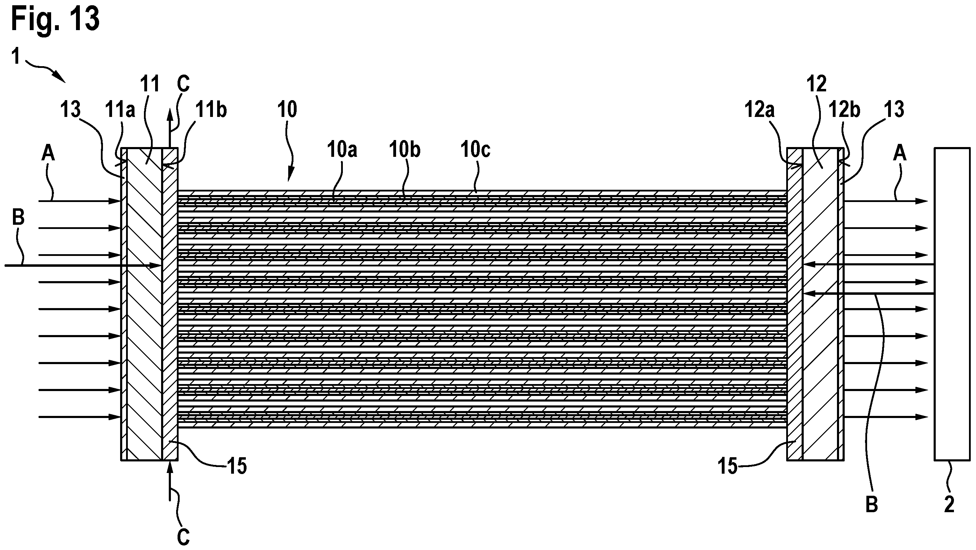

Figur 13 zeigt einen horizontalen Schnitt durch eine erfindungsgemäße Strahlführungsvorrichtung 1 gemäß einem zwölften Ausführungsbeispiel.

Auch in diesem Fall geht das Faseraustrittselement 12 beispielsweise auf das Faseraustrittselement 12 des ersten Ausführungsbeispiels der Figur 2 zurück. Zusätzlich zu den dort gezeigten und beschriebenen Merkmalen weist die Austrittsseite 11b des Fasereintrittselements 11 um die Faserelemente 10 herum ein mittels einer Kühlwasserströmung C wassergekühltes Absorptions- und Reflektionselement 15 auf, um an dieser Stelle ungewollte Strahlung B zu reflektieren sowie die nicht-reflektierte Strahlung B zu absorbieren und die entsprechende thermische Energie mit der Kühlwasserströmung C abzuführen.

Um vergleichbar von einem Werkstück 2 reflektierte Strahlung B zu reflektieren und zu absorbieren, weist auch das Faseraustrittselement 12 den Faserelementen 10 zugewandt um die Faserelemente 10 herum Absorptions- und Reflektionselement 15 auf, welches jedoch lediglich passiv luftgekühlt ist.

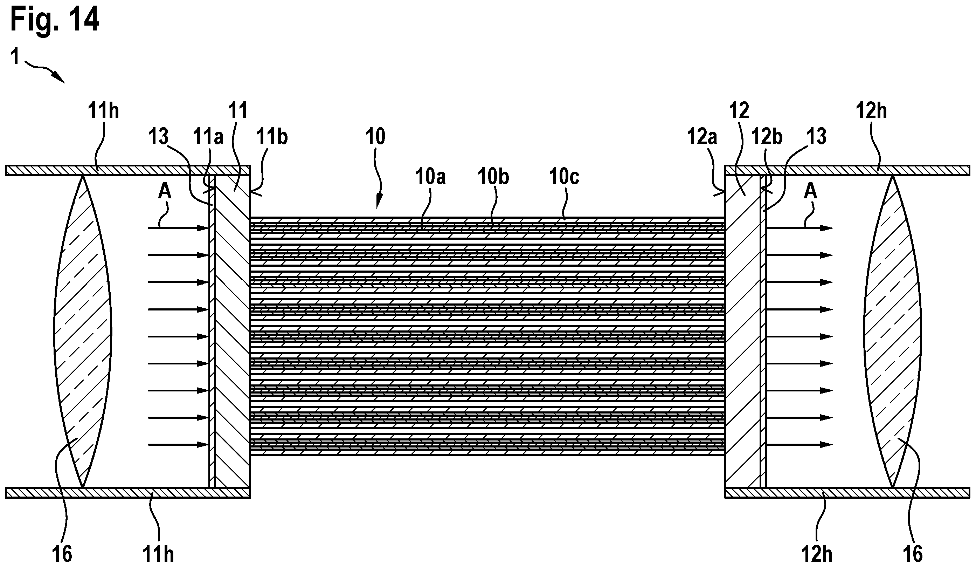

Figur 14 zeigt einen horizontalen Schnitt durch eine erfindungsgemäße Strahlführungsvorrichtung 1 gemäß einem dreizehnten Ausführungsbeispiel.

In diesem Fall erstreckt sich ein Paar von Haltern 11h des Fasereintrittselements 11 der Signallichtstrahlung A entgegen. Die Halter 11h halten gemeinsam von diametral gegenüberliegenden Seiten ein optisches Element 16 in Form einer Sammellinse 16, welche von den eingehenden Signallichtstrahlungen A durchquerst wird, bevor die Signallichtstrahlungen A dann einzeln in die Faserelemente 10 eintreten.

Das Faseraustrittselement 12 weist ebenfalls ein Paar von Haltern 12h mit einer Sammellinse 16 als optisches Element 16 auf, um auch die austretenden Signallichtstrahlungen A diese Sammellinse 16 durchqueren zu lassen.

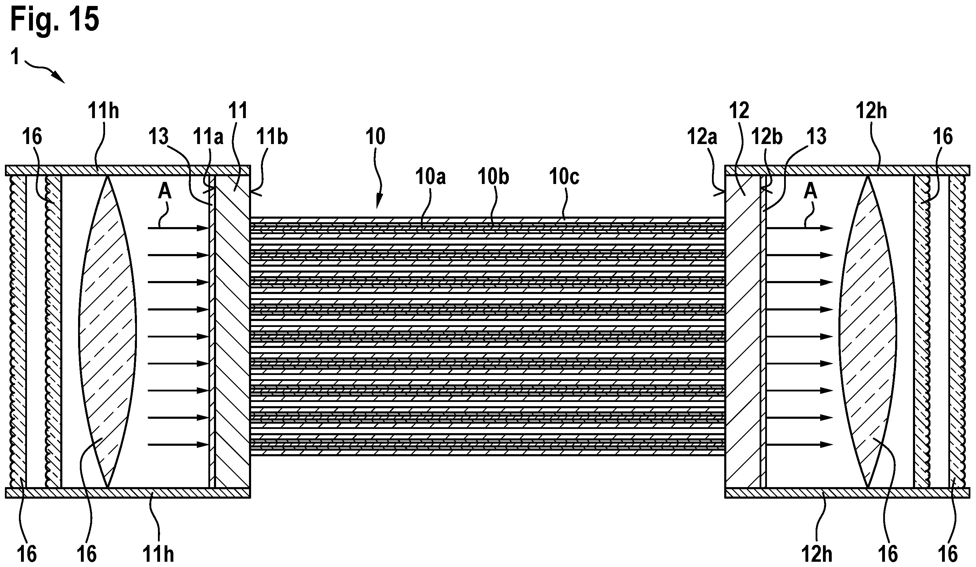

Figur 15 zeigt einen horizontalen Schnitt durch eine erfindungsgemäße Strahlführungsvorrichtung 1 gemäß einem vierzehnten Ausführungsbeispiel.

In diesem Fall sind pro Paar von Haltern 11h, 12h mehrere optische Elemente 16 hintereinander angeordnet. Auf der Seite des Fasereintrittselements 11 durchqueren die Signallichtstrahlungen A nacheinander zuerst ein erstes Mikrolinsenarray 16, dann ein zweites Mikrolinsenarray 16 und danach eine Sammellinse 16, bevor die Signallichtstrahlungen A jeweils in eines der Faserelemente 10 eintreten. Auf der Seite des Faseraustrittselements 12 durchqueren die Signallichtstrahlungen A nacheinander zuerst eine Sammellinse 16, dann ein erstes Mikrolinsenarray 16 und danach ein zweites Mikrolinsenarray 16, bevor die Signallichtstrahlungen A nach außerhalb der Strahlführungsvorrichtung 1 austreten.

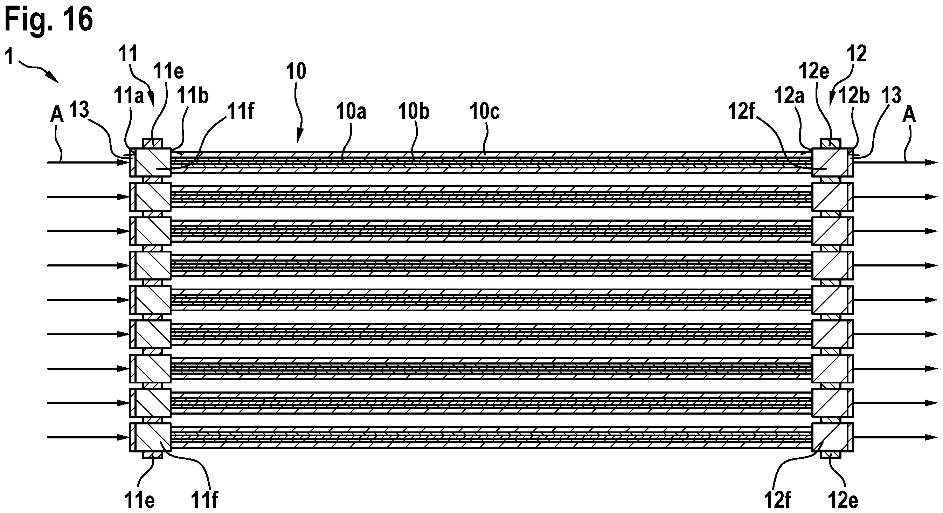

Figur 16 zeigt einen horizontalen Schnitt durch eine erfindungsgemäße Strahlführungsvorrichtung 1 gemäß einem fünfzehnten Ausführungsbeispiel.

In diesem Fall geht das Faseraustrittselement 12 erneut beispielsweise auf das Faseraustrittselement 12 des ersten Ausführungsbeispiels der Figur 2 zurück. Jedoch wird das Fasereintrittselement 11 auf einer Mehrzahl linienförmig angeordneter Einzeleintrittselemente 11f gebildet, wobei genau ein Einzeleintrittselement 11f pro Signallichtstrahlung A vorgesehen ist. Die einzelnen Einzeleintrittselemente 11f werden mittels eines Träger 11e zum Fasereintrittselement 11 verbunden. Dies ist ebenso für das Faseraustrittselements 12 der Fall, welches entsprechend eine Mehrzahl linienförmig angeordneter Einzeleintrittselemente 12f aufweist, welche mittels eines Träger 12e zum Faseraustrittselement 12 verbunden werden.

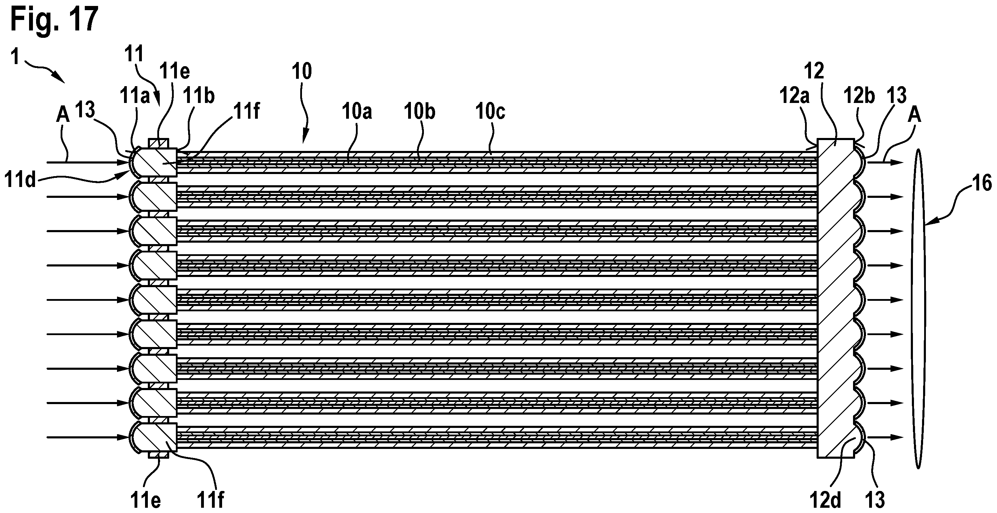

Figur 17 zeigt einen horizontalen Schnitt durch eine erfindungsgemäße Strahlführungsvorrichtung 1 gemäß einem sechszehnten Ausführungsbeispiel.

In diesem Falls weist jedes der Einzeleintrittselemente 11f des Fasereintrittselements 11 gemäß des fünfzehnten Ausführungsbeispiels der Figur 16 der eintretenden bzw. der einfallenden Signallichtstrahlung A jeweils eine Eintrittslinse 11d auf, um die eintretende Signallichtstrahlung A zu bündeln. Auch weist das Faseraustrittselement 12 an seiner Austrittsweise 12b eine Austrittslinse 12d pro Signallichtstrahlung A auf, wobei das Faseraustrittselement 12 in diesem Fall wieder durchgängig bzw. einstückig ausgebildet ist.

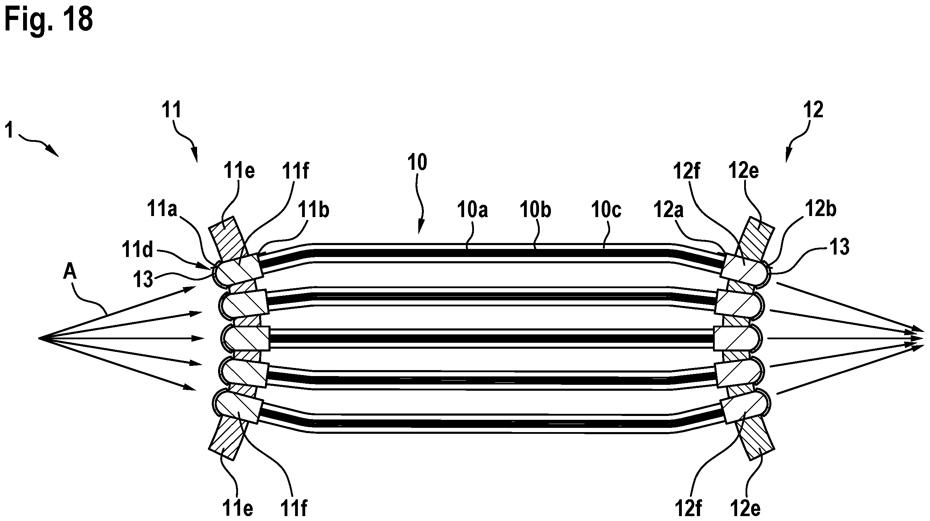

Figur 18 zeigt einen horizontalen Schnitt durch eine erfindungsgemäße Strahlführungsvorrichtung 1 gemäß einem siebzehnten Ausführungsbeispiel.

Dieses siebzehnte Ausführungsbeispiel geht vom vorangehenden sechszehnten Ausführungsbeispiel der Figur 17 aus, wobei der Träger 11e des Fasereintrittselements 11 nach außen gebogen ausgebildet ist. Die Faserelemente 10 verlaufen dann jedoch wieder parallel zueinander. Hierdurch können die Signallichtstrahlungen A quasi von einem Punkt ausgehen und sich dann ausbreiten, um in die jeweilige Eintrittslinse 11d des jeweiligen Einzeleintrittselements 11f des Fasereintrittselements 11 einzutreten. Das Faseraustrittselement 12 ist vergleichbar ausgebildet.

Figur 19 zeigt einen horizontalen Schnitt durch eine erfindungsgemäße Strahlführungsvorrichtung 1 gemäß einem achtzehnten Ausführungsbeispiel.

Hier sind die Faserelemente 10 zum einen linienförmig im bzw. am Fasereintrittselement 11 angeordnet, siehe unten links in der Figur 19, verlaufen dann aber nicht vollständig parallel zueinander, sondern ändern im Verlauf ihrer länglichen Erstreckung die Anordnung zueinander in die zweite Dimension, so dass eine 2X3-Matrix von zwei Faserelementen 10 nebeneinander und drei Faserelementen 10 übereinander am bzw. im Faseraustrittselement 12 ankommt, siehe unten rechts in der Figur 19, und dort befestigt ist. Zum anderen sind die Faserelemente 10 am Faseraustrittselement 12 näher bzw. dichter zueinander angeordnet. Hierdurch kann die resultierende Strahlung der einzelnen Signallichtstrahlungen A beeinflusst und insbesondere in ihrer Leistungsdichte erhöht werden.

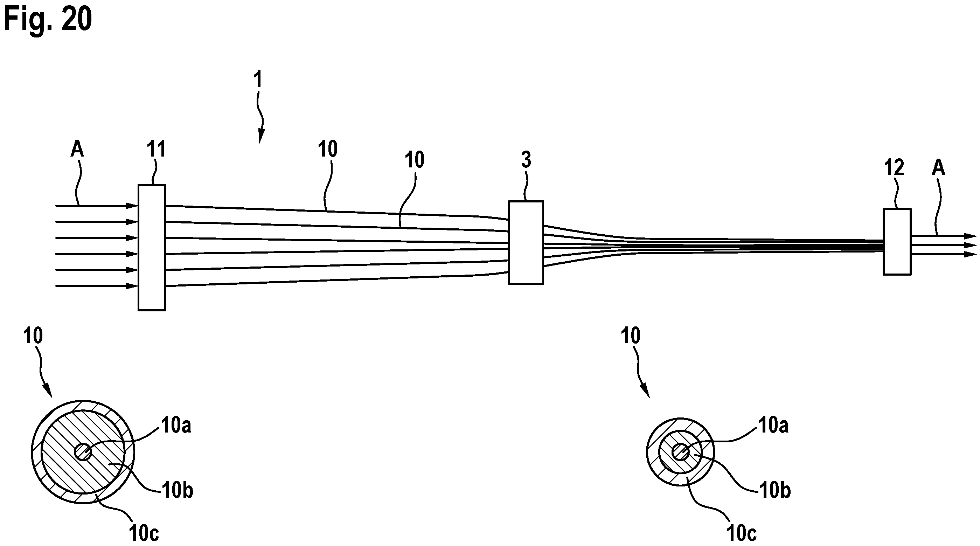

Figur 20 zeigt einen horizontalen Schnitt durch eine erfindungsgemäße Strahlführungsvorrichtung 1 gemäß einem neunzehnten Ausführungsbeispiel.

In diesem Fall weisen die Faserelemente 10 ab dem Fasereintrittselement 11 einen vergleichsweise großflächigen Fasermantel 10b als erste Stränge der Faserelemente 10 auf, siehe unten links in der Figur 20. Etwa mittig zwischen dem Fasereintrittselement 11 und dem Faseraustrittselement 12 enden diese Stränge der Faserelemente 10 und sind mit einem Verbindungselement 3 bzw. einem Übergangselement 3 verbunden. Auf der gegenüberliegenden Seite des Verbindungselements 3 sind zweite Stränge der Faserelemente 10, welche aufgrund dies kleineren bzw. dünneren Fasermantels 10b auf insgesamt einen kleineren bzw. dünneren Gesamtquerschnitt aufweisen, angeordnet, siehe unten rechts in der Figur 20, um die jeweilige Signallichtstrahlung A aufzunehmen und weiterzuleiten. Auch hierdurch kann eine dichtere Anordnung der austretenden Signallichtstrahlungen A bzw. der resultierenden Signallichtstrahlung A der einzelnen Signallichtstrahlungen A mit höherer Leistungsdichte erreicht werden.

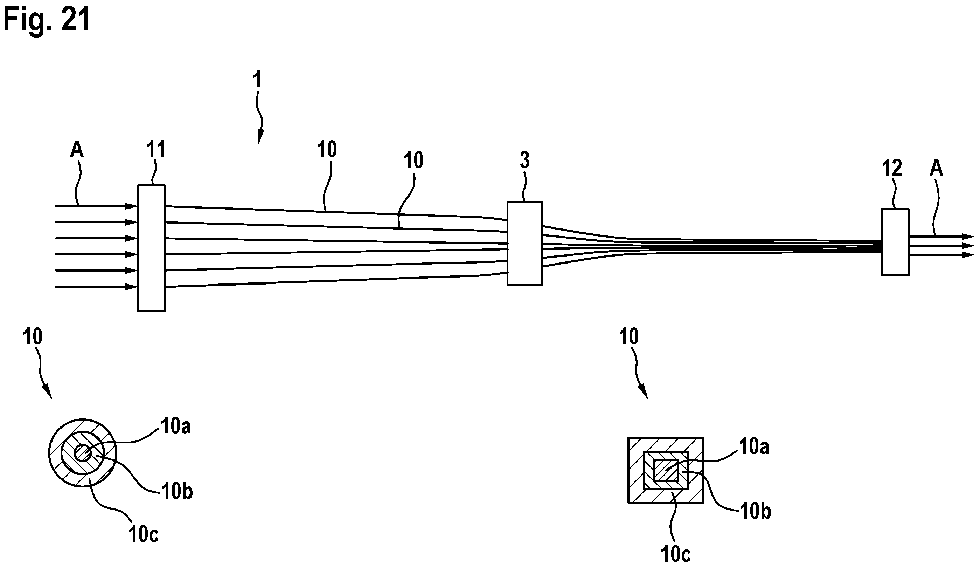

Figur 21 zeigt einen horizontalen Schnitt durch eine erfindungsgemäße Strahlführungsvorrichtung 1 gemäß einem zwanzigsten Ausführungsbeispiel.

Dieses Ausführungsbeispiel ist mit dem vorangehenden Ausführungsbeispiel der Figur 20 vergleichbar, nur dass in diesem Fall der zweite Strang der Faserelemente 10 einen rechteckigen Querschnitt aufweist, siehe unten rechts in der Figur 21.

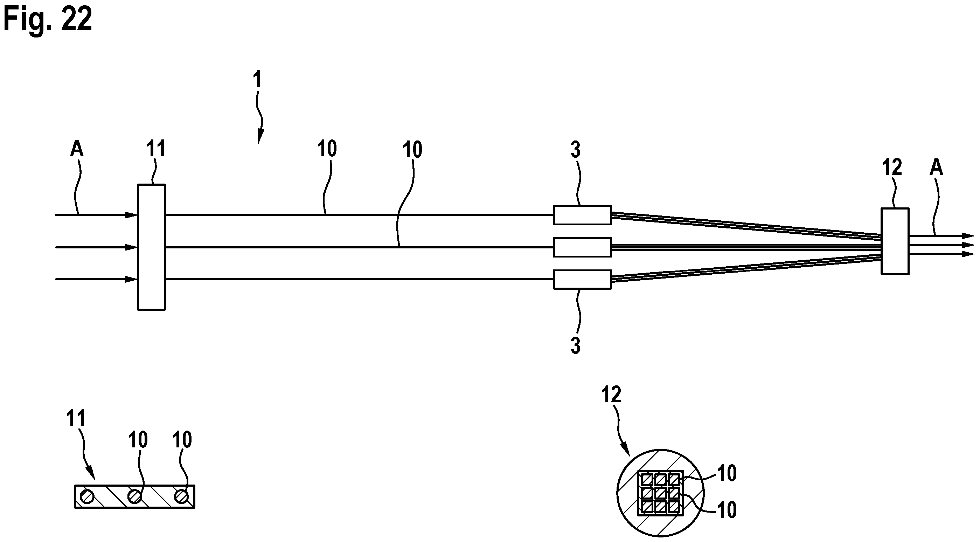

Figur 22 zeigt einen horizontalen Schnitt durch eine erfindungsgemäße Strahlführungsvorrichtung 1 gemäß einem einundzwanzigsten Ausführungsbeispiel.

In diesem Fall ist ein Verbindungselement 3 bzw. ein Übergangselement 3 pro erstem Strang der Faserelemente 10 vorgesehen. Pro Verbindungselement 3 sind von der gegenüberliegenden Seite jeweils drei Stränge pro Faserelement 10 stoffschlüssig mit dem Verbindungselement 3 verbunden, siehe unten links in der Figur 22, so dass die Signallichtstrahlung A eines ersten Strangs eines Faserelements 10 auf drei zweite Stränge pro Faserelements 10 aufgeteilt wird. Die ersten Stränge der Faserelemente 10 sind dabei nebeneinander angeordnet. Die drei Mal drei zweiten Stränge der Faserelemente 10 sind als 3x3-Matrix neben- und übereinander angeordnet, wobei die zweiten Stränge der Faserelemente 10 übereinander, d.h. jeweils horizontal, verlaufend angeordnet sind, siehe unten rechts in der Figur 22.

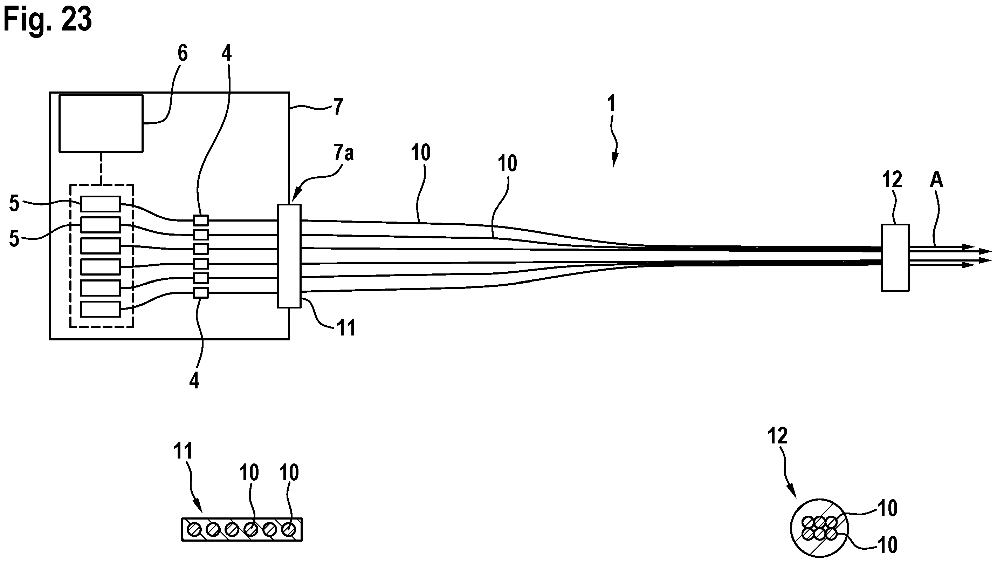

Figur 23 zeigt einen horizontalen Schnitt durch eine erfindungsgemäße Strahlführungsvorrichtung 1 gemäß einem zweiundzwanzigsten Ausführungsbeispiel mit einer Signalstrahlungsquelle 5.

Genauer gesagt wird jede einzelne Signallichtstrahl A von einer eigenen Signalstrahlungsquelle 5 in Form eines Faserlasers 5 oder eines Diodenlasers 5 erzeugt. Die Signalstrahlungsquellen 5 werden von einer Steuerungseinheit 6 gesteuert bzw. betrieben. Jede Signallichtstrahlung A wird von einer Glasfaser zu einem Faserkoppler 4, zu einer Faserweiche 4 bzw. zu einem Faserschalter 4 geführt, um dort ausgekoppelt und zum Fasereintrittselement 11 wie zuvor beschrieben, d.h. gemäß einem der Ausführungsbeispiele, ausgesendet zu werden. Dabei ist das Fasereintrittselement 11 in einer Gehäusedurchführung 7a eines Gehäuse 7 angeordnet, welches die zuvor beschriebenen Komponenten aufnimmt.

In diesem Fall sind sechs Faserelemente 10 vorgesehen, welche nebeneinander, d.h. in einer Reihe, angeordnet und seitlich zueinander beabstandet mit dem Fasereintrittselement 11 verbunden sind, siehe unten links in der Figur 23. Entlang ihres länglichen Verlaufs werden die Faserelemente 10 enger zueinander und in zwei Lagen zu je drei Faserelementen 10 übereinander geführt, so dass die Faserelemente 10 als 2x3-Matrix mit dem Faseraustrittselement 12 verbunden sind, siehe unten rechts in der Figur 23, und die Signallichtstrahlungen A in dieser Konstellation kompakt und rechteckig als resultierende Signallichtstrahlung A nach außen bzw. aus einer Bearbeitungseinheit 92, vgl. Figur 1, in die Umgebung bzw. zum Werkstück 2 hin austreten.

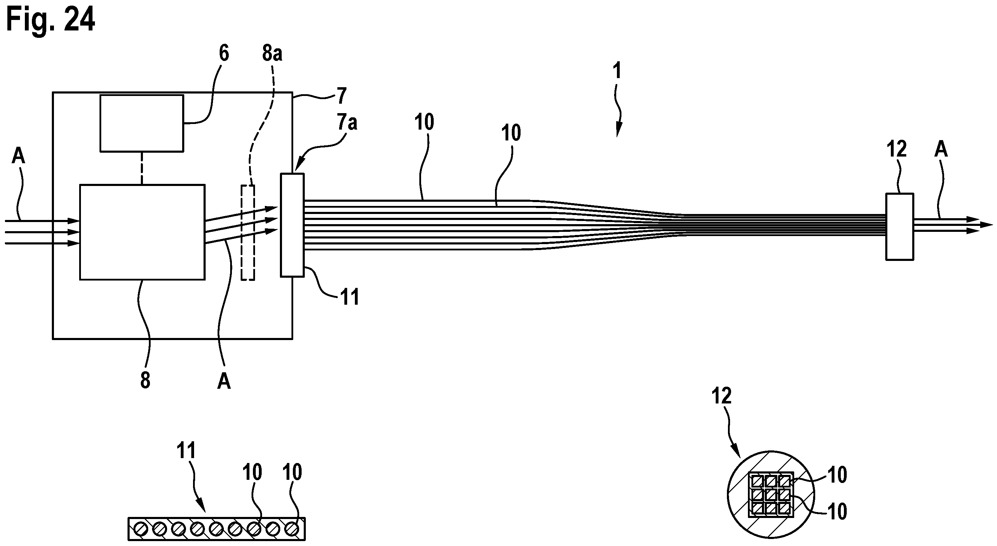

Figur 24 zeigt einen horizontalen Schnitt durch eine erfindungsgemäße Strahlführungsvorrichtung 1 gemäß einem dreiundzwanzigsten Ausführungsbeispiel mit einer Signalstrahlungsquelle 5.

In diesem Fall treten die Signallichtstrahlungen A von einer Signallichtquellen 5 (nicht dargestellt) durch eine offene oder transparente Öffnung (nicht darstellt) in das Gehäuse 7 ein und erreichen dort eine Strahlführungs- und -umlenkeinheit 8, welche die Signallichtstrahlungen A mittels eines Umlenkelements 8a unterschiedlichen Faserelementen 10 zuführen kann, welche mit dem Fasereintrittselement 11 verbunden sind. Genauer gesagt werden der Strahlführungs- und - umlenkeinheit 8 drei Signallichtstrahlungen A zugeführt und es sind neun Faserelemente 10 vorhanden, welche am Fasereintrittselement 11 in einer Reihe nebeneinander angeordnet sind, siehe unten links in der Figur 24, und im Verlauf der Strahlführungsvorrichtung 1 an dem Faseraustrittselement 12 eine 3x3-Matrix bilden, siehe unten rechts in der Figur 24.

Werden somit die drei Signallichtstrahlungen A den linken drei Faserelementen 10 des Fasereintrittselements 11 zugeführt, so erreichen die Signallichtstrahlungen A die obere Reihe von Faserelementen 10 am Faseraustrittselement 12. Werden die drei Signallichtstrahlungen A den mittleren drei Faserelementen 10 des Fasereintrittselements 11 zugeführt, so erreichen die Signallichtstrahlungen A die mittlere Reihe von Faserelementen 10 am Faseraustrittselement 12. Werden die drei Signallichtstrahlungen A den rechten drei Faserelementen 10 des Fasereintrittselements 11 zugeführt, so erreichen die Signallichtstrahlungen A die untere Reihe von Faserelementen 10 am Faseraustrittselement 12.Auf diese Art und Weise kann eine vergleichsweise einfache Steuerung durch Zuführung der Signallichtstrahlungen A zu unterschiedlichen Orten entlang der Strahlführungsvorrichtung 1 erfolgen.

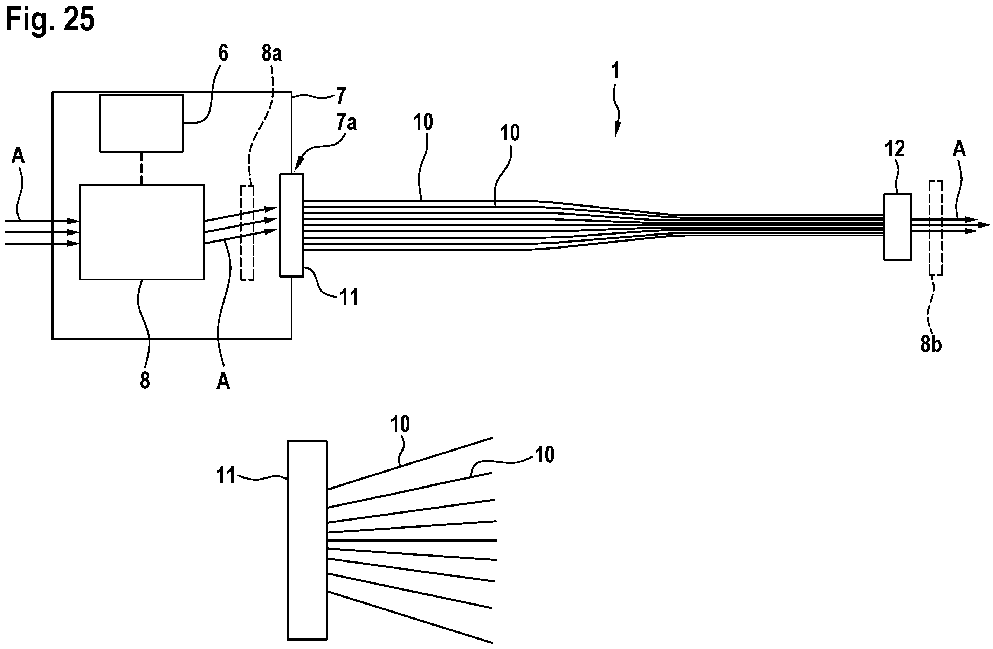

Figur 25 zeigt einen horizontalen Schnitt durch eine erfindungsgemäße Strahlführungsvorrichtung 1 gemäß einem vierundzwanzigsten Ausführungsbeispiel mit einer Signalstrahlungsquelle 5.

Die Darstellung der Figur 25 entspricht der vorangehenden Darstellung der Figur 24 mit dem Unterschied, dass die Faserelemente 10 nicht gerade bzw. nicht geradlinig vom Fasereintrittselement 11 wegzeigen, sondern schräg, siehe unten in der Figur 25, was eine kompakte Verbindung bzw. Anbindung der Faserelemente 10 am Fasereintrittselement 11 mit anschließender Aufweitung der Faserelemente 10 ermöglichen kann.

Ferner ist hinter dem Faseraustrittselement 12 ein weiteres optisches Ausgangselement 8b zur Beeinflussung der austretenden Signalstrahlungen A vorgesehen.

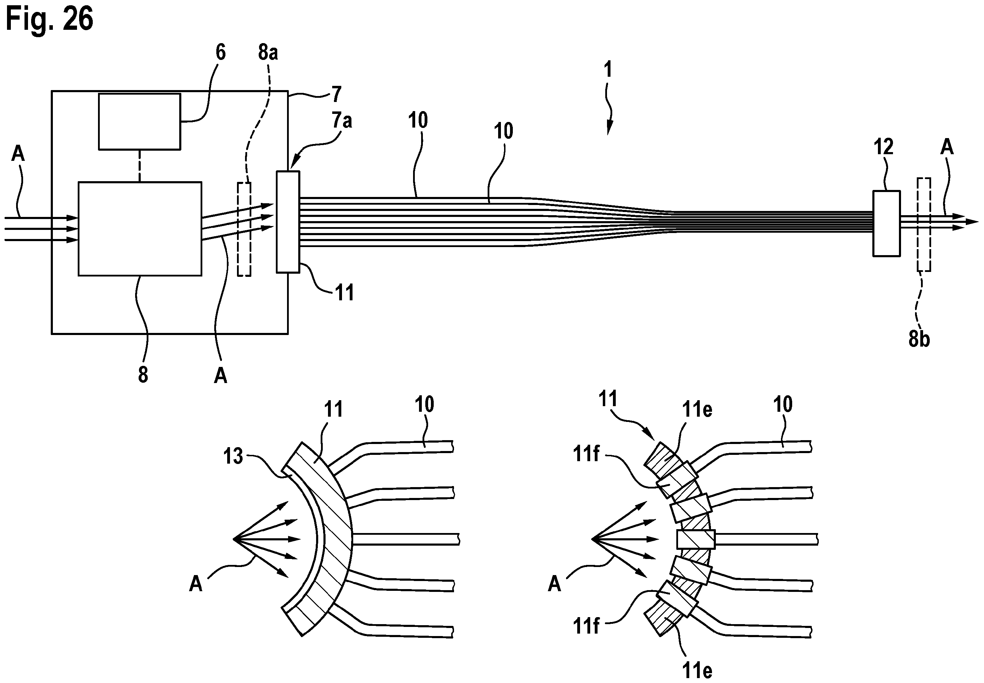

Figur 26 zeigt einen horizontalen Schnitt durch eine erfindungsgemäße Strahlführungsvorrichtung 1 gemäß einem fünfundzwanzigsten Ausführungsbeispiel mit einer Signalstrahlungsquelle 5.

Die Darstellung der Figur 26 entspricht der vorangehenden Darstellung der Figur 25 mit dem Unterschied, dass das Fasereintrittselement 11 gebogen bzw. konkav ausgebildet ist, so dass die Signallichtstrahlungen A vom Umlenkelement 8a sozusagen sternförmig weitergeleitet werden können und jeweils geradlinig in eines der Faserelemente 10 eintreten. Dann verlaufen die Faserelemente 10 parallel zueinander, siehe unten links in der Figur 26.

Alternativ können zu diesem Zweck auch mehrere Einzeleintrittselemente 11f mittels eines gebogenen Trägers 11e bogenförmig angeordnet werden, siehe unten rechts in der Figur 26, wie hinsichtlich des siebzehnten Ausführungsbeispiels der Figur 18 bereits erläutert.

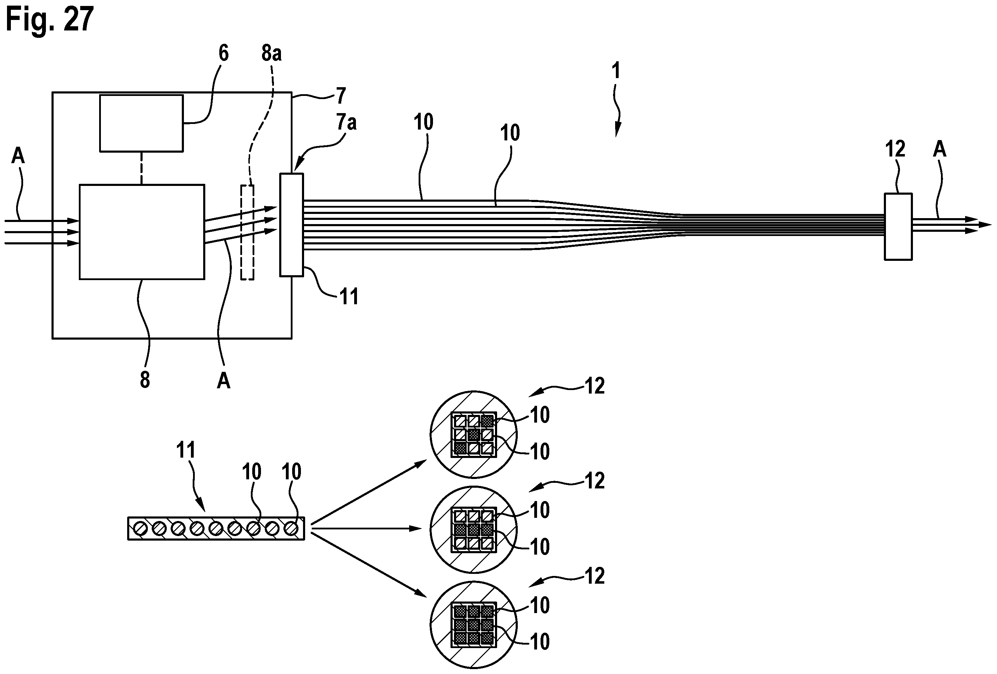

Figur 27 zeigt einen horizontalen Schnitt durch eine erfindungsgemäße Strahlführungsvorrichtung 1 gemäß einem sechsundzwanzigsten Ausführungsbeispiel mit einer Signalstrahlungsquelle 5.

Das sechsundzwanzigste Ausführungsbeispiel der Figur 27 greift das dreiundzwanzigste Ausführungsbeispiel der Figur 24 auf, wobei mittels des Umlenkelements 8a auch andere Konstellationen bzw. Kombinationen von Faserelementen 10 mit den Signallichtstrahlungen A gespeist werden können, siehe unten rechts in der Figur 27, so dass nicht nur geradlinig horizontale Signallichtstrahlungen A am Ausgang des Faseraustrittselements 12 erzeugt werden können, siehe unten rechts mittig in der Figur 27, sondern auch ein diagonaler Verlauf, siehe unten rechts oben in der Figur 27. Auch können alle Faserelemente 10 gleichzeitig gespeist werden, siehe unten rechts unten in der Figur 27, falls ausreichend Signallichtstrahlungen A zur Verfügung gestellt werden.

### BEZUGSZEICHENLISTE (Teil der Beschreibung)

- A: Signallichtstrahlungen; Laserlichtstrahlungen
- B: absorbierte bzw. reflektierte Strahlung
- C: Kühlwasserströmung

- 1: Strahlführungsvorrichtung; Faserkabel; Glasfaserkabel

- 10: Faserelemente; flexible Fasern; Glasfasern
- 10a: Faserkerne
- 10b: Fasermäntel
- 10c: Faserbeschichtungen

- 11: Fasereintrittselement
- 11a: Eintrittsseite des Fasereintrittselements 11 bzw. der Einzeleintrittselemente 11f
- 11b: Austrittsseite des Fasereintrittselements 11 bzw. der Einzeleintrittselemente 11f
- 11c: Vertiefungen der Austrittsseite 11b des Fasereintrittselements 11
- 11d: Eintrittslinsen
- 11e: Träger der Einzeleintrittselemente 11f
- 11f: Einzeleintrittselemente
- 11g: Abstandselement
- 11h: Halter
- 11i: Durchgangsöffnungen des Fasereintrittselements 11
- 11j: Zwischenraum; Abstand

- 12: Faseraustrittselement
- 12a: Eintrittsseite des Faseraustrittselements 12 bzw. der Einzelaustrittselemente 12f
- 12b: Austrittsseite des Faseraustrittselements 12 bzw. der Einzelaustrittselemente 12f
- 12c: Vertiefungen der Austrittsseite 12b des Faseraustrittselements 12
- 12d: Austrittlinsen
- 12e: Träger der Einzelaustrittselemente 12f
- 12f: Einzeleintrittselemente
- 12g: Abstandselement
- 12h: Halter
- 12i: Durchgangsöffnungen des Faseraustrittselements 12
- 12j: Zwischenraum; Abstand

- 13: optische Beschichtung; Anti-Reflektionsbeschichtung; Reflektionsbeschichtung; Absorptionsbeschichtung

- 14: Pumplichtfallen

- 15: Absorptions- und/oder Reflektionselement

- 16: optisches Element bzw. Optik; Sammellinse; Mikrolinsenarray; optische Elemente bzw. Optiken

- 2: Werkstück

- 3: Verbindungselement; Übergangselement

- 4: Faserkoppler; Faserweichen; Faserschalter

- 5: Signallichtquellen; Faserlaser; Diodenlaser
- 5a: Signallichtverstärker

- 6: Steuerungseinheit

- 7: Gehäuse
- 7a: Gehäusedurchführung

- 8: Strahlführungs- und -umlenkeinheit
- 8a: Umlenkelement
- 8b: optisches Ausgangselement

- 9: Handhabungseinheit; Knickarmroboter
- 90: Basis
- 91: Glieder; Arme
- 92: Endeffektoreinheit; Bearbeitungseinheit

## Patentansprüche

1. Strahlführungsvorrichtung (1) zur Führung von Signallichtstrahlung (A)
mit wenigstens einem Fasereintrittselement (11), welches ausgebildet ist, die Signallichtstrahlung (A) aufzunehmen,
mit wenigstens einem Faseraustrittselement (12), welches ausgebildet ist, die Signallichtstrahlung (A) abzugeben, und
mit einer Mehrzahl von Faserelementen (10), welche mit ihrem einen Ende mit dem Fasereintrittselement (11) und mit dem gegenüberliegenden Ende mit dem Faseraustrittselement (12) feststehend verbunden und ausgebildet sind, die Signallichtstrahlung (A) vom Fasereintrittselement (11) zum Faseraustrittselement (12) zu führen.

2. Strahlführungsvorrichtung (1) nach Anspruch 1,
wobei die Enden der Faserelemente (10) in dem Fasereintrittselement (11) und/oder in dem Faseraustrittselement (12) verschmolzen sind.

3. Strahlführungsvorrichtung (1) nach Anspruch 1 oder 2,
wobei das Fasereintrittselement (11) den Faserelementen (10) zugewandt pro Faserelement (10) eine Vertiefung (11c) oder eine Durchgangsöffnung (11i) aufweist, in welcher das Ende des Faserelements (10) aufgenommen wird, und/oder
wobei das Faseraustrittselement (12) den Faserelementen (10) zugewandt pro Faserelement (10) eine Vertiefung (12c) oder eine Durchgangsöffnung aufweist, in welcher das Ende des Faserelements (10) aufgenommen wird.

4. Strahlführungsvorrichtung (1) nach einem der vorangehenden Ansprüche,
wobei wenigstens einige, vorzugsweise alle, Faserelemente (10) wenigstens eine Pumplichtfalle (14) aufweisen,
wobei die Pumplichtfallen (14) vorzugsweise jeweils an dem Fasereintrittselement (11) und/oder an dem Faseraustrittselement (12) angeordnet sind.

5. Strahlführungsvorrichtung (1) nach einem der vorangehenden Ansprüche,
wobei das Fasereintrittselement (11) den Faserelementen (10) abgewandt eine optische Beschichtung (13), vorzugsweise eine Anti-Reflektionsbeschichtung (13), aufweist und/oder
wobei das Faseraustrittselement (12) den Faserelementen (10) abgewandt eine optische Beschichtung (13), vorzugsweise eine Anti-Reflektionsbeschichtung (13), aufweist.

6. Strahlführungsvorrichtung (1) nach einem der vorangehenden Ansprüche,
wobei das Fasereintrittselement (11) den Faserelementen (10) zugewandt um die Faserelemente (10) herum eine optische Beschichtung (13), vorzugsweise eine Reflektionsbeschichtung (13) und/oder eine Absorptionsbeschichtung (13), aufweist und/oder
wobei das Faseraustrittselement (12) den Faserelementen (10) zugewandt um die Faserelemente (10) herum eine optische Beschichtung (13), vorzugsweise eine Reflektionsbeschichtung (13) und/oder eine Absorptionsbeschichtung (13), aufweist.

7. Strahlführungsvorrichtung (1) nach einem der vorangehenden Ansprüche,
wobei das Fasereintrittselement (11) den Faserelementen (10) zugewandt um die Faserelemente (10) herum wenigstens ein, vorzugsweise luft- oder wassergekühltes, Absorptions- und/oder Reflektionselement (15) aufweist und/oder
wobei das Faseraustrittselement (12) den Faserelementen (10) zugewandt um die Faserelemente (10) herum wenigstens ein, vorzugsweise luft- oder wassergekühltes, Absorptions- und/oder Reflektionselement (15) aufweist.

8. Strahlführungsvorrichtung (1) nach einem der vorangehenden Ansprüche,
wobei das Fasereintrittselement (11) den Faserelementen (10) abgewandt pro eintretendem Strahl der Signallichtstrahlung (A) eine, vorzugsweise mit einer optischen Beschichtung (13), vorzugsweise mit einer Anti-Reflektionsbeschichtung (13), versehene, Eintrittslinse (11d) aufweist und/oder
wobei das Faseraustrittselement (12) den Faserelementen (10) abgewandt pro austretendem Strahl der Signallichtstrahlung (A) eine, vorzugsweise mit einer optischen Beschichtung (13), vorzugsweise mit einer Anti-Reflektionsbeschichtung (13), versehene, Austrittslinse (12d) aufweist.

9. Strahlführungsvorrichtung (1) nach einem der vorangehenden Ansprüche,
wobei das Fasereintrittselement (11) pro Faserelement (10) ein Einzeleintrittselement (11f) aufweist,
wobei die Einzeleintrittselemente (11f) mittels eines Trägers (11e) feststehend miteinander verbunden sind, und/oder
wobei das Faseraustrittselement (12) pro Faserelement (10) ein Einzelaustrittselement (12f) aufweist,
wobei die einzelnen Faseraustrittselemente (12f) mittels eines Trägers (12e) feststehend miteinander verbunden sind.

10. Strahlführungsvorrichtung (1) nach Anspruch 9,
wobei der Träger (11e, 12e) Glas, Metall oder Keramik aufweist, vorzugsweise hieraus besteht.

11. Strahlführungsvorrichtung (1) nach Anspruch 9 oder 10,
wobei der Träger (11e, 12e) zumindest abschnittsweise, vorzugsweise im Wesentlichen, eine, vorzugsweise optisch reflektierende und/oder optisch adsorbierende, Oberflächenbeschichtung aufweist.

12. Strahlführungsvorrichtung (1) nach einem der vorangehenden Ansprüche,
wobei das Fasereintrittselement (11) wenigstens ein Abstandselement (11g) aufweist, welches senkrecht zu den Faserelementen (10) verläuft und ausgebildet ist, die Signallichtstrahlung (A) aufzunehmen und zu den Faserelementen (10) hin abzugeben,
wobei das Abstandselement (11g) zu den Faserelementen (10) hin durch einen, vorzugsweise offenen, gasgefüllten, flüssigkeitsgefüllten, feststoffgefüllten oder vakuumierten, Zwischenraum (11j) beabstandet ist, und/oder
wobei das Faseraustrittselement (12) wenigstens ein Abstandselement (12g) aufweist, welches senkrecht zu den Faserelementen (10) verläuft und ausgebildet ist, die Signallichtstrahlung (A) von den Faserelementen (10) aufzunehmen und von der Strahlführungsvorrichtung (1) weg abzugeben,
wobei das Abstandselement (12g) zu den Faserelementen (10) hin durch einen, vorzugsweise offenen, gasgefüllten, flüssigkeitsgefüllten, feststoffgefüllten oder vakuumierten, Zwischenraum (12j) beabstandet ist.

13. Strahlführungsvorrichtung (1) nach Anspruch 12,
wobei die Faserelemente (10) dem Abstandselement (11g, 12g) zugewandt durch Durchgangsöffnungen (11j, 12j) des Fasereintrittselements (11) oder des Faseraustrittselements (12) hindurch, vorzugsweise zurückversetzt, mit dem Zwischenraum (11j, 12j) verbunden sind oder
wobei die Faserelemente (10) dem Abstandselement (11g, 12g) zugewandt von Vertiefungen (11c, 12c) des Fasereintrittselements (11) oder des Faseraustrittselements (12), vorzugsweise zurückversetzt, aufgenommen werden.

14. Strahlführungsvorrichtung (1) nach einem der vorangehenden Ansprüche
ferner mit wenigstens einem optischen Element (16), vorzugsweise mit wenigstens einer Sammellinse (16), welches den Faserelementen (10) abgewandt zum Fasereintrittselement (11) mittels eines Halters (11h) beabstandet angeordnet und ausgebildet ist, einige, vorzugsweise alle, eintretende Strahlen der Signallichtstrahlung (A) aufzunehmen, und/oder
ferner mit wenigstens einem optischen Element (16), vorzugsweise mit wenigstens einer Sammellinse (16), welches den Faserelementen (10) abgewandt zum Faseraustrittselement (12) mittels eines Halters (12h) beabstandet angeordnet und ausgebildet ist, einige, vorzugsweise alle, austretenden Strahlen der Signallichtstrahlung (A) aufzunehmen.

15. Strahlführungsvorrichtung (1) nach Anspruch 14,
wobei das optische Element (16) ein Mikrolinsenarray (16) ist,
wobei das Mikrolinsenarray (16) eine Mikrolinse pro Faserelement (10), mehrere Mikrolinsen pro Faserelement (10) oder eine gemeinsame Mikrolinse für mehrere Faserelemente (10) aufweist.

16. Strahlführungsvorrichtung (1) nach einem der vorangehenden Ansprüche
ferner mit einer Einzellinse pro Faserelement (10) einiger, vorzugsweise alle, Faserelemente (10), welche den Faserelementen (10) abgewandt zum Fasereintrittselement (10) oder zum Faseraustrittselement (12) beabstandet angeordnet und ausgebildet ist, jeweils genau einen austretenden Strahl der Signallichtstrahlung (A) aufzunehmen.

17. Strahlführungsvorrichtung (1) nach einem der vorangehenden Ansprüche,
wobei einige, vorzugweise alle, Faserelemente (10) am Fasereintrittselement (11) unterschiedlich, vorzugsweise größer, als am Faseraustrittselement (12) zueinander beabstandet sind.

18. Strahlführungsvorrichtung (1) nach einem der vorangehenden Ansprüche,
wobei einige, vorzugsweise alle, Faserelemente (10) am Fasereintrittselement (11) eine andere räumliche Anordnung zueinander als am Faseraustrittselement (12) aufweisen.

19. Strahlführungsvorrichtung (1) nach Anspruch 18,
wobei einige, vorzugsweise alle, Faserelemente (10) am Fasereintrittselement (11) eindimensional zueinander und am Faseraustrittselement (12) zweidimensional zueinander angeordnet sind.

20. Strahlführungsvorrichtung (1) nach einem der vorangehenden Ansprüche,
wobei einige, vorzugsweise alle, Faserelemente (10) jeweils zylindrisch ausgebildet sind und am Fasereintrittselement (11), vorzugsweise hinsichtlich eines Faserkerns (10a), eines Fasermantels (10b) und/oder einer Faserbeschichtung (10c), mit einem größeren Querschnitt als am Faseraustrittselement (12) ausgebildet sind.

21. Strahlführungsvorrichtung (1) nach einem der vorangehenden Ansprüche,
wobei einige, vorzugsweise alle, Faserelemente (10) jeweils am Fasereintrittselement (11) mit einer anderen Kontur als am Faseraustrittselement (12) ausgebildet sind.

22. Strahlführungsvorrichtung (1) nach einem der vorangehenden Ansprüche,
wobei einige, vorzugsweise alle, Faserelemente (10) jeweils zwischen dem Fasereintrittselement (11) und dem Faseraustrittselement (12) mehrfach geteilt werden.

23. Strahlführungsvorrichtung (1) nach einem der Ansprüche 20 bis 22,
wobei einige, vorzugsweise alle, Faserelemente (10) zweigeteilt ausgebildet und, vorzugsweise etwa mittig zwischen dem Fasereintrittselement (11) und dem Faseraustrittselement (12) oder näher am Fasereintrittselement (11) oder am Faseraustrittselement (12), mittels eines Verbindungselements (3), vorzugsweise stoffschlüssig, miteinander verbunden sind.

24. Strahlführungsvorrichtung (1) nach einem der vorangehenden Ansprüche,
wobei einige, vorzugsweise alle, Faserelemente (10) einzelne flexible Fasern (10), vorzugsweise Glasfasern (10), sind, welche gemeinsam oder in Bündeln von einem flexiblen Material zusammengehalten, besonders vorzugsweise von einem Mantel umschlossen, werden, und
wobei die Strahlführungsvorrichtung (1) ein Faserkabel (1), vorzugsweise ein Glasfaserkabel (1), ist.

25. Strahlführungsvorrichtung (1) nach einem der vorangehenden Ansprüche,
wobei einige, vorzugswiese alle, Faserelemente (10) schief zum Fasereintrittselement (11) und/oder zum Faseraustrittselement (12) ausgerichtet sind.

26. Strahlführungsvorrichtung (1) nach einem der vorangehenden Ansprüche,
wobei das Fasereintrittselement (11) und/oder das Faseraustrittselement (12) gekrümmt ausgebildet ist/sind,
wobei die Faserelemente (10) vorzugsweise parallel zur Flächennormalen des Fasereintrittselements (11) und/oder des Faseraustrittselements (12) ausgerichtet sind.
